(19) Europäisches Patentamt
European Patent Office
Office européen des brevets

(11) EP 4 130 059 B1

(12) EUROPEAN PATENT SPECIFICATION

(45) Date of publication and mention of the grant of the patent:
**05.08.2026 Bulletin 2026/32**

(21) Application number: **21774229.5**

(22) Date of filing: **26.03.2021**

(51) International Patent Classification (IPC):
***C08F 8/48*** (2006.01) ***C08F 220/14*** (2006.01)
***C08L 33/12*** (2006.01) ***C08L 33/24*** (2006.01)
***C08L 53/00*** (2006.01) ***C08F 8/32*** (2006.01)
***C08J 5/18*** (2006.01) ***C08F 265/06*** (2006.01)
***C08F 279/02*** (2006.01) ***C08L 51/00*** (2006.01)
***C08L 51/04*** (2006.01) ***C08F 293/00*** (2006.01)
***C08F 285/00*** (2006.01) *C08F 212/12* (2006.01)

(52) Cooperative Patent Classification (CPC):
(C-Sets available)
**C08J 5/18; C08F 8/32; C08F 8/48; C08F 265/06; C08F 279/02; C08F 285/00; C08F 293/00; C08L 51/003; C08L 51/04;** C08F 212/12; C08J 2333/12 (Cont.)

(86) International application number:
**PCT/JP2021/012887**

(87) International publication number:
**WO 2021/193922 (30.09.2021 Gazette 2021/39)**

# (54) ACRYLIC COMPOSITION AND MOLDED ARTICLE

ACRYLZUSAMMENSETZUNG UND FORMARTIKEL

COMPOSITION ACRYLIQUE ET ARTICLE MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2020 JP 2020055466**

(43) Date of publication of application:
**08.02.2023 Bulletin 2023/06**

(73) Proprietor: **Kuraray Co., Ltd.**
**Kurashiki-shi, Okayama 710-0801 (JP)**

(72) Inventors:
- **NOMOTO, Yusaku**
**Tainai-shi, Niigata 959-2691 (JP)**
- **KAINO, Masafumi**
**Tainai-shi, Niigata 959-2691 (JP)**

(74) Representative: **Müller-Boré & Partner Patentanwälte PartG mbB**
**Friedenheimer Brücke 21**
**80639 München (DE)**

(56) References cited:
**JP-A- H01 261 445**
**JP-A- H01 315 461**
**JP-A- S6 289 705**
**US-A- 4 888 387**
**JP-A- H01 315 461**
**JP-A- H06 136 216**
**JP-A- S63 163 301**
**US-A1- 2011 015 347**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 8/48, C08F 8/32, C08F 220/14;**
**C08F 8/48, C08F 220/14;**
**C08F 265/06, C08F 220/14, C08F 220/14, C08F 220/40;**
**C08F 279/02, C08F 212/08, C08F 220/14, C08F 220/1802;**
**C08F 279/02, C08F 220/14, C08F 220/1802;**
**C08F 285/00, C08F 220/14, C08F 220/14;**
**C08L 51/003, C08L 53/00;**
**C08L 51/04, C08L 53/00**

## Description

### Technical Field

The present invention relates to an acrylic resin composition and a molded article.

### Background Art

A methacrylic resin is excellent in transparency, weather resistance, surface hardness, and the like. By molding an acrylic resin composition containing the methacrylic resin, various members used for a display member, an electronic and electrical member, a transport part, and the like can be obtained. In recent years, improvement in performance of various members has been demanded, and in particular, improvement in heat resistance has been strongly demanded.

In order to improve heat resistance, an acrylic resin composition having a ring structure in a main chain skeleton has been proposed. For example, PTL 1 discloses a modified-methacrylic resin containing a structural unit derived from methyl methacrylate or the like, and a structural unit having at least one ring structure in a main chain and selected from the group consisting of a lactone ring unit, a glutaric anhydride unit, and an N-substituted or unsubstituted glutarimide unit. In addition, PTL 2 discloses a copolymer containing a (meth)acrylic acid ester monomer unit, an unsaturated dicarboxylic acid anhydride monomer unit, and an unsaturated aromatic vinyl monomer unit.

Furthermore, since an acrylic resin having high heat resistance has relatively low strength and low toughness, there are concerns about insufficient impact resistance of a molded article and deterioration of productivity in terms of molding processability and handleability of a film. As a technique for improving strength of a heat-resistant acrylic resin, a technique for containing an elastomer is disclosed. PTL 3 discloses a technique in which a crosslinked elastic body having a multilayer structure is contained as an elastomer in an acrylic resin containing a glutaric anhydride unit. In addition, PTL 4 discloses a technique of adding an acrylic rubber as an elastomer to an acrylic resin containing a maleic anhydride unit. Furthermore, PTL 5 discloses a technique of adding a block copolymer containing a methacrylic acid ester polymer block and an acrylic acid ester polymer block as elastomers to an acrylic resin containing a structural unit having at least one ring structure in a main chain, the structural unit being selected from the group consisting of a lactone ring unit, a maleic anhydride unit, a glutaric anhydride unit, a glutarimide unit, an N-substituted maleimide unit, and a tetrahydropyran ring structural unit. PTL 6 discloses a technique of adding a graft copolymer as an elastomer to an acrylic resin having a glass transition temperature of 120°C or higher and a refractive index of 1.50 or more, and an imidized resin of a methyl methacrylate-styrene copolymer as an acrylic resin is described in Examples. Further, PTL 7 discloses a resin composition comprising, in specific proportions, a copolymer comprising hexagonal units, methyl methacrylate units, (meth)acrylic acid units and optionally aromatic vinyl compound units, a graft copolymer rubber and at least one polymer selected from a polyamide and a polycarbonate. Moreover, PTL 8 discloses a resin composition comprising polyamide or polycarbonate and specific copolymer and graft copolymer rubber, which has excellent moldability, rigidity, heat resistance, water resistance and chemical resistance, high mechanical strength and significantly improved impact resistance, and is suitable as a material for parts of automobiles, home appliances, office equipment and the like.

### Citation List

#### Patent Literature

PTL 1: JP2017-179103A
PTL 2: WO2014/021264A1
PTL 3: JP2000-178399A
PTL 4: JPH05-119217A
PTL 5: JP2016-008225A
PTL 6: JP2009-203348A
PTL 7: US4888387A
PTL 8: JPH01-315461A

### Summary of Invention

#### Technical Problem

In any of the techniques disclosed in the prior arts, the strength of the heat-resistant acrylic resin is improved, but

deterioration of surface hardness, deterioration of dimensional stability due to an increase in water absorption rate, and the like are observed, and excellent properties inherent in the acrylic resin cannot be sufficiently exhibited.

In view of the above circumstances, an object of the present invention is to provide an acrylic resin composition and a molded article that maintain heat resistance and mechanical strength (toughness) and have excellent surface hardness and dimensional stability.

Solution to Problem

As a result of studies for achieving the above object, the present invention provides an acrylic resin composition and a molded article as set out in the appended set of claims.

Advantageous Effects of Invention

According to the present invention, a molded article having high heat resistance and a low water absorption rate, and a film having excellent dimensional stability and high surface hardness can be obtained.

Description of Embodiments

An acrylic resin composition of the present invention contains an acrylic copolymer (A) and an elastomer (B). A content of the acrylic copolymer (A) in the acrylic resin composition is 51 to 99% by mass, preferably 55 to 95% by mass, and still more preferably 60 to 90% by mass. When the content of the acrylic copolymer (A) in the acrylic resin composition is 51% by mass or more, heat resistance and surface hardness are excellent, and when content of the acrylic copolymer (A) in the acrylic resin composition is 99% by mass or less, brittleness is prevented.

(Acrylic Copolymer (A))

The acrylic copolymer (A) according to the present invention contains a methyl methacrylate unit, an α-methylstyrene unit, and a structural unit (R). The acrylic copolymer according to the present invention may further contain another vinyl-based monomer unit (C) copolymerizable with methyl methacrylate. The other vinyl-based monomer unit (C) copolymerizable with methyl methacrylate may contain a methacrylic acid amide unit represented by the following Formula (A), and a methyl 2-(hydroxyalkyl)acrylate unit represented by the following Formula (B) .

[Chem. 2]

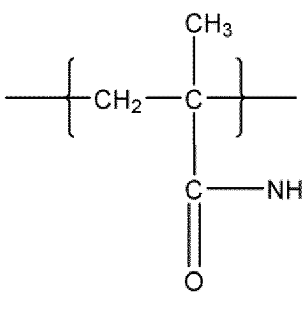

,

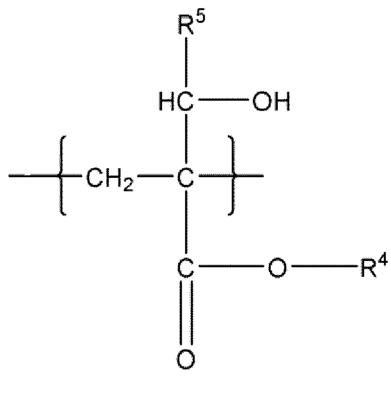

(A) (B)

(In the formula, $R^3$ is a hydrogen atom, an alkyl group having 1 to 18 carbon atoms, a cycloalkyl group having 3 to 12 carbon atoms, or an organic group having an aromatic ring and 6 to 15 carbon atoms, preferably a hydrogen atom, a methyl group, an n-butyl group, a cyclohexyl group, or a benzyl group, and more preferably a methyl group, an n-butyl group, or a cyclohexyl group, and $R^4$ and $R^5$ are each independently a hydrogen atom or an organic group having 1 to 20 carbon atoms, preferably a hydrogen atom or an organic group having 1 to 10 carbon atoms, and more preferably a hydrogen atom or an organic group having 1 to 5 carbon atoms, here, the organic group is not particularly limited as long as it has 1 to 20 carbon atoms, and examples thereof include a linear or branched alkyl group, a linear or branched aryl group, an $-OCOCH_3$ group, and a -CN group, the organic group may contain a heteroatom such as an oxygen atom, and $R^4$ is

preferably a methyl group, and $R^5$ is preferably a hydrogen atom.)

In the acrylic copolymer (A) according to the present invention, a proportion of the methyl methacrylate unit is 30 to 87% by mass, preferably 40 to 85% by mass, and more preferably 55 to 80% by mass, with respect to all the structural units. When the proportion of the methyl methacrylate unit is less than this range, a total light transmittance of the obtained acrylic copolymer is deteriorated, and when the proportion of the methyl methacrylate unit is more than this range, heat resistance of the obtained acrylic copolymer is deteriorated.

In the acrylic copolymer (A) according to the present invention, a proportion of the α-methylstyrene unit is 7 to 30% by mass, preferably 8 to 27% by mass, and more preferably 11 to 25% by mass, with respect to all the structural units. When the proportion of the α-methylstyrene unit is less than this range, a saturated water absorption rate of the obtained acrylic copolymer is increased. In addition, the acrylic copolymer in which the proportion of the α-methylstyrene unit exceeds 30% by mass has low polymerizability and low productivity.

The structural unit (R) is an N-substituted glutarimide unit. The acrylic copolymer according to the present invention may contain a methacrylic acid amide unit represented by Formula (A) and/or a 2-(hydroxyalkyl)acrylic acid ester unit represented Formula (B) in the main chain.

A glutaric anhydride unit not in accordance with the present invention is a unit having a 2,6-dioxodihydropyrandiyl structure. Examples of the unit having the 2,6-dioxodihydropyrandiyl structure can include a structural unit represented by Formula (II).

[Chem. 3]

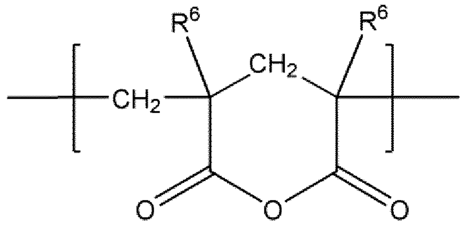

(II)

In Formula (II), $R^6$'s are each independently a hydrogen atom or an alkyl group having 1 to 5 carbon atoms, and two $R^6$'s are preferably methyl groups.

The unit having the 2,6-dioxodihydropyrandiyl structure not in accordance with the present invention can be contained in an acrylic copolymer by the method described in JP2007-197703A, JP2010-096919A, or the like, for example, by intramolecular cyclization of two adjacent structural units derived from (meth)acrylic acid, intramolecular cyclization of a structural unit derived from (meth)acrylic acid and a structural unit derived from methyl (meth)acrylate, or the like.

The N-substituted glutarimide unit is a unit having an N-substituted 2,6-dioxopiperidinediyl structure.

The unit having the N-substituted 2,6-dioxopiperidinediyl structure is a structural unit represented by Formula (I).

[Chem. 4]

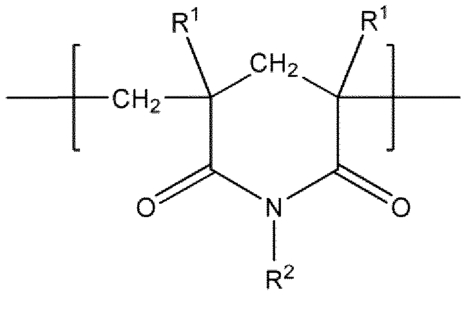

(I)

In Formula (I), $R^1$'s are each independently a hydrogen atom or a methyl group, and two $R^1$'s are preferably methyl groups. $R^2$ is a hydrogen atom, an alkyl group having 1 to 18 carbon atoms, a cycloalkyl group having 3 to 12 carbon atoms, or an organic group having an aromatic ring and 6 to 15 carbon atoms, preferably a methyl group, an n-butyl group, a cyclohexyl group, or a benzyl group because it can reduce a water absorption rate, more preferably a methyl group, an n-butyl group, or a cyclohexyl group, and most preferably a methyl group.

The structural unit represented by Formula (I) may be produced, for example, by a reaction of a corresponding acid anhydride (IIa) with an imidizing agent represented by $R^2NH_2$ as shown in Scheme (i), or may be produced by an intramolecular cyclization reaction of a copolymer having a partial structure of Formula (III). It is preferable to perform

heating in order to convert the structural unit represented by Formula (III) into the structural unit represented by Formula (I) by the intramolecular cyclization reaction.

Scheme (i)

[Chem. 5]

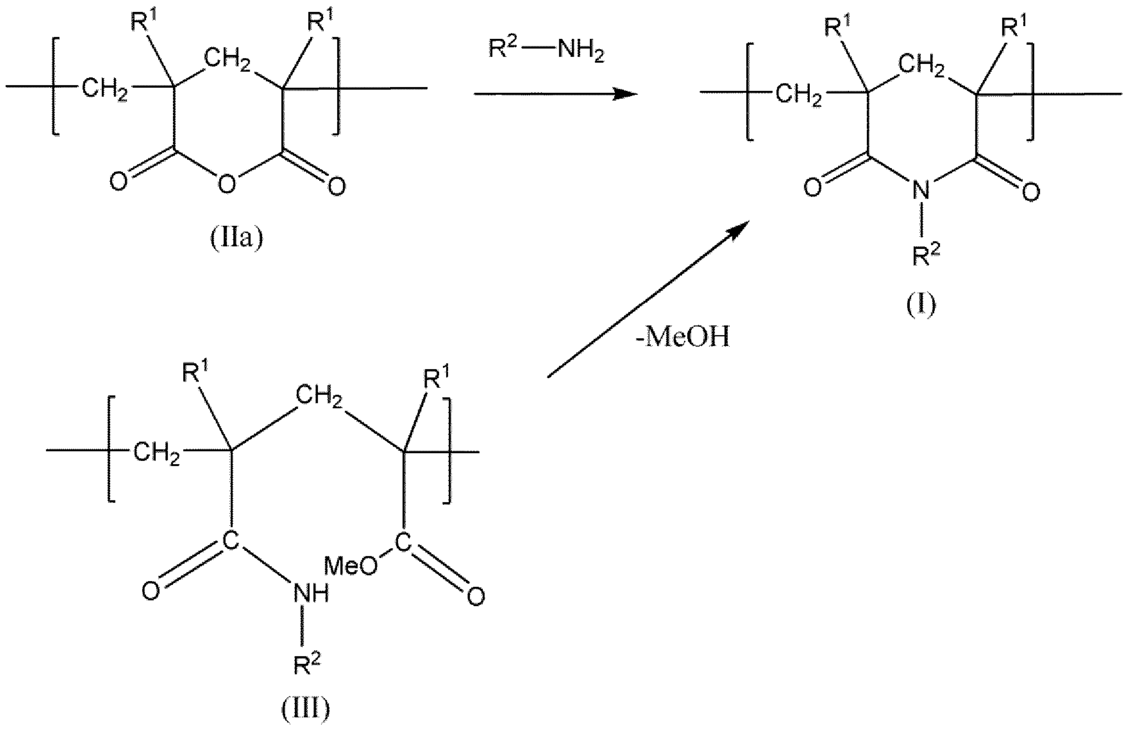


(IIa)

(I)

(III)

(In the formula, $R^1$ and $R^2$ are as defined above.)

The N-substituted glutarimide unit can be obtained by the method described in WO2005/10838A1, JP2010-254742A, JP2008-273140A, JP2008-274187A, or the like, specifically, by reacting two adjacent structural units derived from methyl methacrylate or glutaric anhydride units with an imidizing agent, for example, an aliphatic hydrocarbon group-containing amine such as ammonia, methylamine, ethylamine, n-propylamine, isopropylamine, n-butylamine, isobutylamine, tert-butylamine, or n-hexylamine, an aromatic hydrocarbon group-containing amine such as aniline, toluidine, or trichloroaniline, an alicyclic hydrocarbon group-containing amine such as cyclohexylamine, urea, 1,3-dimethylurea, 1,3-diethylurea, or 1,3-dipropylurea. Among them, methylamine is preferable. During the imidization reaction, a part of the methyl methacrylate unit may be hydrolyzed to become a carboxyl group, and the carboxyl group is preferably returned to the original methyl methacrylate unit by an esterification reaction treated with an esterifying agent. The esterifying agent is not particularly limited as long as the effect of the present application can be exhibited, and dimethyl carbonate and trimethyl acetate can be suitably used. In addition, a tertiary amine such as trimethylamine, triethylamine, or tributylamine may be used in combination as a catalyst, in addition to the esterifying agent.

In the acrylic copolymer (A) according to the present invention, a proportion of the structural unit (R) is 6 to 40% by mass, preferably 7.5 to 35% by mass, and more preferably 8 to 30% by mass, with respect to all the structural units. An orientation birefringence of the acrylic copolymer can be changed by changing a ratio of the structural unit (R) to methyl methacrylate. In addition, as a content of the structural unit (R) is increased, the acrylic copolymer has improved heat resistance, but pliability, compatibility with another copolymer, and molding processability of the acrylic copolymer tend to be deteriorated.

Examples of the other vinyl-based monomer unit (C) copolymerizable with the methyl methacrylate unit (hereinafter, may be described as the monomer unit (C)) include an acrylic acid ester monomer unit (C-1), an aromatic vinyl monomer unit (C-2), a vinyl cyanide monomer unit (C-3), and a monomer unit (C-4) other than these units. The other vinyl-based monomer units (C) copolymerizable with the methyl methacrylate unit may be used alone or in combination of two or more thereof.

As the monomer unit (C), an appropriate material can be selected according to properties required for the acrylic copolymer according to the present invention, and in a case where properties such as thermal stability, fluidity, chemical resistance, optical properties, and compatibility with another resin are particularly required, at least one selected from the group consisting of an acrylic acid ester monomer unit, an aromatic vinyl monomer unit, and a vinyl cyanide monomer unit is preferable.

The acrylic acid ester monomer unit (C-1) constituting the acrylic copolymer according to the present invention is not particularly limited, and is preferably methyl acrylate, ethyl acrylate, n-propyl acrylate, n-butyl acrylate, sec-butyl acrylate, 2-ethylhexyl acrylate, benzyl acrylate, cyclohexyl acrylate, phenyl acrylate, or the like from the viewpoint of heat resistance, fluidity, heat resistance stability, productivity, and the like, more preferably methyl acrylate, ethyl acrylate, n-butyl acrylate, or the like, and still more preferably methyl acrylate, ethyl acrylate, or the like from the viewpoint of productivity.

The acrylic acid ester monomer units (C-1) may be used alone or in combination of two or more thereof.

In a case where the acrylic acid ester monomer unit (C-1) is used, a content thereof is preferably 20% by mass or less and more preferably 10% by mass or less with respect to all the structural units from the viewpoint of heat resistance and thermal stability.

The aromatic vinyl monomer unit (C-2) constituting the acrylic copolymer according to the present invention is not particularly limited, styrene (St), o-methylstyrene, m-methylstyrene, p-methylstyrene, 2,4-dimethylstyrene, 2,5-dimethylstyrene, 3,4-dimethylstyrene, 3,5-dimethylstyrene, p-ethylstyrene, m-ethylstyrene, o-ethylstyrene, p-tert-butylstyrene, 1-vinylnaphthalene, 2-vinylnaphthalene, 1,1-diphenylethylene, isopropenyltoluene, isopropenylethylbenzene, isopropenylpropylbenzene, isopropenylbutylbenzene, isopropenylbenzylbenzene, isopropenylhexylbenzene, isopropenyloctylbenzene, or the like is preferable from the viewpoint of heat resistance, fluidity, heat resistance stability, productivity, and the like, and styrene is more preferable from the viewpoint of copolymerization reactivity with $\alpha$-methylstyrene during production of a precursor polymer described below.

The aromatic vinyl monomer units (C-2) may be used alone or in combination of two or more thereof.

In a case where the aromatic vinyl monomer unit (C-2) is used, a content thereof is preferably 3% by mass or more and 20% by mass or less and more preferably 4% by mass or more and 15% by mass or less with respect to all the structural units from the viewpoint of heat resistance and thermal stability.

The vinyl cyanide monomer unit (C-3) constituting the acrylic copolymer according to the present invention is not particularly limited, acrylonitrile (AN), methacrylonitrile, vinylidene cyanide, or the like is preferable from the viewpoint of heat resistance, fluidity, heat resistance stability, chemical resistance, productivity, and the like, and among them, acrylonitrile is preferable from the viewpoint of availability and chemical resistance impartment.

The vinyl cyanide monomer units (C-3) may be used alone or in combination of two or more thereof.

In a case where the vinyl cyanide monomer unit (C-3) is used, a content thereof is preferably 20% by mass or less and more preferably 10% by mass or less with respect to all the structural units from the viewpoint of heat resistance and thermal stability.

The monomer forming the monomer unit (C-4) other than (C-1) to (C-3) constituting the acrylic copolymer according to the present invention is not particularly limited, may be a monomer corresponding to a methacrylic acid amide unit represented by Formula (A) or a monomer corresponding to a 2-(hydroxyalkyl)acrylic acid ester unit represented Formula (B), and examples thereof include amides such as acrylamide and methacrylamide; a monomer obtained by esterifying, with acrylic acid or methacrylic acid, both-terminal hydroxyl groups of ethylene glycols or oligomers thereof, such as ethylene glycol di(meth)acrylate, diethylene glycol di(meth)acrylate, triethylene glycol di(meth)acrylate, and tetraethylene glycol di(meth)acrylate; a monomer obtained by esterifying, with acrylic acid or methacrylic acid, hydroxyl groups of two alcohols such as neopentyl glycol di(meth)acrylate; and a monomer obtained by esterifying, with acrylic acid or methacrylic acid, polyhydric alcohol derivatives such as trimethylolpropane and pentaerythritol.

Among the monomers constituting the monomer unit (C) described above, at least one selected from the group consisting of methyl acrylate (MA), ethyl acrylate, styrene, and acrylonitrile is preferable from the viewpoint of availability, and styrene is more preferable from the viewpoint of moisture resistance.

In the acrylic copolymer according to the present invention, a proportion of the other vinyl-based monomer unit (C) copolymerizable with the methyl methacrylate unit is preferably 0 to 20% by mass, more preferably 0 to 15% by mass, and still more preferably 0 to 10% by mass, with respect to all the structural units. When the proportion of the other vinyl-based monomer unit (C) copolymerizable with the methyl methacrylate unit exceeds 20% by mass, the acrylic copolymer has reduced heat resistance and rigidity. Note that the proportions of the methyl methacrylate unit, the $\alpha$-methylstyrene unit, the structural unit (R), and the monomer unit (C) can be measured by $^{1}$H-NMR, $^{13}$C-NMR, or the like.

A weight average molecular weight (Mw) of the acrylic copolymer (A) according to the present invention is preferably 40,000 to 200,000, more preferably 50,000 to 180,000, and still more preferably 55,000 to 160,000. When the Mw is 40,000 or more, strength, toughness, and the like of the molded article of the present invention are improved. When the Mw is 200,000 or less, fluidity of the acrylic copolymer is improved, and molding processability is improved.

The weight average molecular weight (Mw) is a value calculated by converting a chromatogram measured by gel

permeation chromatography into a molecular weight of standard polystyrene.

An acid value of the acrylic copolymer (A) according to the present invention is preferably 0.01 to 0.30 mmol/g and more preferably 0.05 to 0.28 mmol/g. The acid value is a value proportional to the content of the carboxylic acid unit and the carboxylic anhydride unit in the acrylic copolymer. The acid value can be calculated, for example, by the method described in JP2005-23272A. When the acid value is within the above range, a balance among heat resistance, mechanical properties, and molding processability is excellent.

A lower limit of a glass transition temperature of the acrylic copolymer (A) according to the present invention is preferably 130°C, more preferably 131°C, and still more preferably 132°C, and an upper limit of the glass transition temperature of the acrylic copolymer according to the present invention is not particularly limited, and is preferably 160°C.

Herein, the "glass transition temperature (Tg)" is measured in accordance with JIS K7121. Specifically, the temperature is once raised to 230°C, cooling is then performed to room temperature, and thereafter, a DSC curve is measured under a condition in which the temperature is raised from room temperature to 230°C at 10 °C/min. The midpoint obtained from the DSC curve measured at the time of the second temperature rise is determined as the "glass transition temperature (Tg)".

The saturated water absorption rate of the acrylic copolymer (A) according to the present invention is measured under the following conditions. The acrylic copolymer is press-molded to obtain a sheet having a thickness of 1.0 mm. A test piece with a size of 50 mm × 50 mm is cut out from the central portion of the obtained press-molded sheet, and the test piece is dried with a dryer at 80°C for 16 hours or longer. After the dried test piece is cooled to room temperature in a desiccator, the weight is measured to 0.1 mg, and the weight is defined as an initial weight Wo. The test piece is immersed in distilled water at 23°C, after immersion for 24 hours, the test piece is taken out from water, and the moisture on the surface is completely wiped off with a clean and dry cloth or filter paper. Within 1 minute of removal from the water, the test piece is again weighed to 0.1 mg. The test piece is immersed again, and after 24 hours, the weight is measured again in the same manner as described above. The weight when a weight change rate of the test piece is within 0.02% of Wo is defined as a saturated weight Ws. The saturated water absorption rate is calculated from Equation (2).

[Math. 1]

$$\text{Saturated water absorption rate} = ((Ws - Wo)/Wo) \times 100 \quad (2)$$

The saturated water absorption rate is preferably 2.5% or less, more preferably 2.1% or less, and still more preferably 2.0% or less.

A 1% heat weight reduction temperature of the acrylic copolymer (A) according to the present invention in a nitrogen atmosphere is preferably 265°C or higher and more preferably 270°C or higher.

The acrylic copolymer (A) according to the present invention can be obtained by a method including performing a ring structure forming reaction on a copolymer (hereinafter, may be referred to as a precursor polymer) of methyl methacrylate, α-methylstyrene, and if necessary, another vinyl-based monomer unit (C) copolymerizable with methyl methacrylate.

That is, the production method can include:

- a step of continuously supplying, to a tank-type reactor, a reaction raw material containing a monomer mixture of 60 to 93% by mass of methyl methacrylate, 30 to 7% by mass of α-methylstyrene, and 0 to 20% by mass of a copolymerizable monomer (C), a radical polymerization initiator, and if necessary, a chain transfer agent;
- a step of performing bulk polymerization of the monomer mixture in the tank-type reactor at a polymerization conversion rate of up to 30 to 60% by mass to obtain a reaction product;
- a step of removing the monomer mixture in the reaction product to obtain a precursor polymer; and
- a step of performing a ring structure forming reaction on the obtained precursor polymer, in which each step can be performed by a known technique.

The precursor polymer is produced by polymerization from the reaction raw material containing a monomer mixture, a radical polymerization initiator, and if necessary, a chain transfer agent, and the monomer mixture contains the methyl methacrylate in an amount of 51 to 90% by mass and preferably 65 to 85% by mass. In addition, the α-methylstyrene is contained in the monomer mixture in an amount of 49 to 10% by mass and preferably 35 to 15% by mass. Furthermore, the copolymerizable monomer (C) is contained in the monomer mixture in an amount of 0 to 20% by mass and preferably 0 to 15% by mass.

In the monomer mixture, b* is preferably -1 to 2 and more preferably -0.5 to 1.5. When b* is within this range, it is advantageous in obtaining a molded product having almost no coloration with high production efficiency when the obtained acrylic copolymer composition is molded. Note that b* is a value measured in accordance with International Commission on Illumination (CIE) Standard (1976) or JIS Z8722.

The polymerization initiator used is not particularly limited as long as it generates a reactive radical. Examples

thereof include a peroxide-based initiator such as diisopropylbenzene hydroperoxide or t-butyl hydroperoxide, and an azo-based initiator such as 2,2'-azobis(2-methylpropionitrile).

It is desirable that the polymerization initiator used has an average uncleaved initiator concentration at a polymerization temperature in the tank-type reactor described below is within a range of $5.1 \times 10^{-5}$ to $2.4 \times 10^{-4}$ (mol/L). The amount of the polymerization initiator used is adjusted to the polymerization temperature, and the polymerization initiator is added to the monomer mixture to have the initiator concentration.

As the chain transfer agent used, monofunctional alkyl mercaptans such as n-octyl mercaptan and n-dodecyl mercaptan are preferable. These chain transfer agents can be used alone or in combination of two or more thereof. The amount of the chain transfer agent used is preferably 0 to 1 part by mass, more preferably 0.01 to 0.8 parts by mass, and still more preferably 0.02 to 0.6 parts by mass, with respect to 100 parts by mass of the monomer mixture.

The temperature in the tank-type reactor, that is, the temperature of the solution in the reactor, is preferably 110 to 140°C and more preferably 114 to 135°C. When the temperature is higher than this range, it is difficult to produce a high-molecule-weight compound containing α-methylstyrene, which causes deterioration of heat resistance.

In the tank-type reactor, the bulk polymerization is preferably performed until the polymerization conversion rate reaches 30 to 65% by mass and preferably 35 to 60% by mass.

In addition, an average retention time (θ) of the reaction raw material in the tank-type reactor is preferably 1.5 to 5 hours, more preferably 2 to 4.5 hours, and still more preferably 2.5 to 4 hours. When the average retention time is too short, the amount of the polymerization initiator required is increased. In addition, the increase in the amount of the polymerization initiator makes it difficult to control the polymerization reaction and tends to make it difficult to control the molecular weight. On the other hand, when the average retention time is too long, it takes time until the reaction becomes a steady state, and productivity tends to be decreased. The average retention time can be adjusted by a capacity of the tank-type reactor and the amount of the reaction raw material supplied.

The bulk polymerization is preferably performed in an inert gas atmosphere such as nitrogen gas.

The production method according to the present invention includes a step of removing the monomer mixture in the reaction product. The removal method is not particularly limited and is preferably a thermal devolatilization method. After the monomer mixture is removed, the acrylic resin composition can be formed into pellets or powder particles according to a known method in order to facilitate handling as a molding material. A content of the monomer mixture in the obtained acrylic resin composition is preferably 1% by mass or less and more preferably 0.5% by mass or less.

A lower limit of a glass transition temperature of the precursor polymer is preferably 115°C, more preferably 120°C, and still more preferably 125°C, and an upper limit of the glass transition temperature of the precursor polymer is preferably 150°C. The glass transition temperature can be changed by adjusting the molecular weight, the α-methylstyrene copolymerization amount, and the like. As the glass transition temperature of the precursor polymer is higher, the heat resistance is more improved. An acrylic copolymer obtained using a precursor polymer having a high glass transition temperature has high heat resistance even when the amount of the structural unit (R) is small. Therefore, the acrylic copolymer hardly causes deterioration of the saturated water absorption rate or the like.

The precursor polymer is not particularly limited as long as the total content of the structural unit derived from methyl methacrylate is 60 to 93% by mass, the total content of the structural unit derived from α-methylstyrene is 30 to 7% by mass, and the amount of the structural unit derived from a copolymerizable monomer (C) is 0 to 20% by mass. From the viewpoint of polymerizability, transparency, and the like, the total content of the structural unit derived from methyl methacrylate in the precursor polymer is preferably 65% by mass or more and 93% by mass or less, more preferably 70% by mass or more and 92% by mass or less, and most preferably 75% by mass or more and 92% by mass or less.

From the viewpoint of heat resistance, polymerizability, a water absorption rate, and the like, the total content of the structural unit derived from α-methylstyrene in the precursor polymer is preferably 7% by mass or more and 30% by mass or less, more preferably 8% by mass or more and 27% by mass or less, and still more preferably 11 to 25% by mass. When the content of the structural unit derived from α-methylstyrene is less than this range, sufficient heat resistance cannot be obtained, and when the content of the structural unit derived from α-methylstyrene is more than this range, polymerizability is remarkably deteriorated. The total content of the structural unit derived from a copolymerizable monomer (C) in the precursor polymer is 0 to 20% by mass and preferably 0 to 15% by mass.

The precursor polymer has a weight average molecular weight Mw in terms of polystyrene of preferably 30,000 or more and 200,000 or less, more preferably 40,000 or more and 180,000 or less, and still more preferably 50,000 or more and 160,000 or less, in a chromatogram obtained by gel permeation chromatography. When the weight average molecular weight Mw is smaller than this range, the obtained molded article is brittle, and when the weight average molecular weight Mw is higher than this range, productivity is deteriorated. The Mw can be controlled by adjusting the type, amount, addition time, and the like of the polymerization initiator or the chain transfer agent (optional component) used in the production of the precursor polymer.

The ring structure forming reaction can be performed, for example, using an extruder. Examples of the extruder include a single-screw extruder, a twin-screw extruder, and a multi-screw extruder. A twin-screw extruder is preferable from the viewpoint of mixing performance. The twin-screw extruder includes a non-intermeshing co-rotating twin-screw

extruder, an intermeshing co-rotating twin-screw extruder, a non-intermeshing counter-rotating twin-screw extruder, and an intermeshing counter-rotating twin-screw extruder. The intermeshing counter-rotating twin-screw extruder is preferable because it can rotate at a high speed and can efficiently promote mixing. These extruders may be used alone or may be serially connected to each other.

In the ring structure forming reaction using an extruder, for example, a precursor polymer as a raw material is fed through a raw material feeding part of the extruder, the precursor polymer is melted to fill the inside of a cylinder, and then, an imidizing agent (optional component) and the like are injected into the extruder using an addition pump, such that the ring structure forming reaction can be allowed to proceed in the extruder. When an imidizing agent is used, as the structural unit (R), an N-substituted glutarimide unit is contained. A preferred imidizing agent is represented by $R^2$-$NH^2$ ($R^2$ is as defined above). The imidizing agent is preferably used in an amount of 1.6 to 12 parts by mass with respect to 100 parts by mass of the acrylic copolymer. When the amount of the imidizing agent used is within the above range, by-production of the methacrylic acid amide unit can be suppressed.

A resin temperature in a reaction zone in the extruder is preferably in a range of 180 to 280°C and more preferably in a range of 200 to 280°C. When the resin temperature in the reaction zone is lower than 180°C, the heat resistance of the acrylic copolymer tends to be deteriorated due to a decrease in reaction efficiency of the ring structure forming reaction, by-production of the methacrylic acid amide unit, and the like. When the resin temperature in the reaction zone is higher than 280°C, decomposition of the resin becomes significant, and mechanical strength such as tensile breaking strength of a molded article and film formed of the obtained acrylic copolymer tends to be deteriorated. Note that the reaction zone in the extruder refers to a region from an injection position of an imidizing agent or the like to a resin discharge port (die part) in the cylinder of the extruder.

By increasing the retention time in the reaction zone of the extruder, the ring structure forming reaction can be allowed to proceed. The retention time in the reaction zone of the extruder is preferably longer than 10 seconds and more preferably longer than 30 seconds. When the retention time is 10 seconds or shorter, the ring structure forming reaction may hardly proceed.

A resin pressure in the extruder is preferably in a range of atmospheric pressure to 50 MPa and more preferably in a range of 1 to 30 MPa. When the resin pressure is 50 MPa or more, the resin pressure exceeds the limit of the mechanical pressure of a normal extruder, and a special apparatus is required, which is not preferably in terms of cost.

It is preferable to use an extruder having a vent hole capable of reducing the pressure to atmospheric pressure or less. According to such a configuration, unreacted substances, byproducts such as methanol, or monomers can be removed, and breaking strength of a molded article containing the acrylic resin composition of the present invention tends to be improved.

In the ring structure forming reaction, an appropriate reactor for high-viscosity materials manufactured by Sumitomo Heavy Industries, Ltd., for example, a horizontal twin-screw reactor such as BIVOLAK or a vertical twin-screw stirring tank such as SUPERBLEND can be preferably used instead of the extruder.

During the ring structure forming reaction, a carboxy group may be produced as a by-product in the acrylic copolymer. The carboxy group may be converted into an ester group by an esterifying agent, a catalyst, or the like, if necessary. This makes it possible to reduce foaming of the resin when an optical film is produced. Such an ester group varies depending on an esterifying agent or a catalyst to be used, and from the viewpoint of reduction in resin melt viscosity during melt-molding, reactivity of esterification, and heat resistance of the resin after esterification, it is preferable to contain a methyl methacrylate unit, and it is more preferable to contain both a methyl methacrylate unit and an ethyl methacrylate unit.

As the esterifying agent, dimethyl carbonate is preferable from the viewpoint of cost, reactivity, and the like.

(Elastomer (B))

A content of the elastomer (B) in the acrylic resin composition of the present invention is 1 to 49% by mass, preferably 5 to 45% by mass, and still more preferably 10 to 40% by mass. When the content of the elastomer (B) in the acrylic resin composition of the present invention is in a range of 1 to 49% by mass, brittleness is prevented.

The elastomer (B) used in the present invention is not particularly limited as long as a resin composition is obtained by kneading with the acrylic copolymer (A). The elastomer (B) preferably forms a dispersed phase in the resin composition. The form of the dispersed phase is not particularly limited, and examples thereof include a spherical shape, an ellipsoid shape, a rod shape, a flat shape, and a string shape.

The elastomer (B) preferably contains an acrylic acid ester unit. Examples of the acrylic acid ester include acrylic acid alkyl esters such as methyl acrylate, ethyl acrylate, and butyl acrylate, acrylic acid aryl esters such as phenyl acrylate and benzyl acrylate, and acrylic acid cycloalkyl esters such as cyclohexyl acrylate and norbornenyl acrylate, acrylic acid alkyl esters are preferable, and butyl acrylate is most preferable.

The amount of the acrylic acid ester unit in the elastomer (B) is preferably 30% by mass or more, more preferably 35% by mass or more and 90% by mass or less, and still more preferably 40% by mass or more and 80% by mass or less.

The elastomer (B) may contain a vinyl-based monomer unit having only one polymerizable carbon-carbon double bond in one molecule, in addition to the acrylic acid ester unit. Examples of the vinyl-based monomer include methacrylic acid alkyl esters such as methyl methacrylate, ethyl methacrylate, propyl methacrylate, butyl methacrylate, and 2-ethylhexyl methacrylate; methacrylic acid aryl esters such as phenyl methacrylate; methacrylic acid cycloalkyl esters such as cyclohexyl methacrylate and norbornenyl methacrylate; aromatic vinyl compounds such as styrene and $\alpha$-methylstyrene; acrylamide; methacrylamide; acrylonitrile; and methacrylonitrile.

The elastomer (B) may contain a vinyl-based monomer unit having only one polymerizable carbon-carbon double bond in one molecule, in addition to the acrylic acid ester unit. Examples of the vinyl-based monomer include methacrylic acid alkyl esters such as methyl methacrylate, ethyl methacrylate, propyl methacrylate, butyl methacrylate, and 2-ethylhexyl methacrylate; methacrylic acid aryl esters such as phenyl methacrylate; methacrylic acid cycloalkyl esters such as cyclohexyl methacrylate and norbornenyl methacrylate; aromatic vinyl compounds such as styrene and $\alpha$-methylstyrene; acrylamide; methacrylamide; acrylonitrile; and methacrylonitrile.

The elastomer (B) may further contain a conjugated diene monomer unit. Examples of the conjugated diene monomer unit include 1,3-butadiene, isoprene, and a monomer unit containing both units.

The elastomer (B) is not particularly limited by a molecular form thereof, and examples thereof include a linear polymer elastomer, a branched polymer elastomer, a multilayer copolymer elastomer, and a block copolymer elastomer. Among them, the elastomer (B) preferably contains a multilayer copolymer elastomer containing a methacrylic acid ester unit and an acrylic acid ester unit, or contains a block copolymer elastomer comprising a polymer block (b1) mainly containing a methacrylic acid ester unit and a polymer block (b2) containing an acrylic acid ester unit. The elastomer (B) may contain a combination of a block copolymer elastomer and a multilayer copolymer elastomer.

Examples of the multilayer copolymer elastomer include a multilayer copolymer elastomer including an outermost layer formed of a thermoplastic polymer (P) and an inner layer formed of a crosslinked polymer in contact with the outermost layer so as to cover the outermost layer, and it is preferable that the inner layer and the outermost layer form a core and a shell. Examples of the multilayer copolymer elastomer include a two-layer polymer elastomer in which a core (inner layer) is a crosslinked rubber polymer (Q) and an outer shell (outermost layer) is a thermoplastic polymer (P), a three-layer polymer elastomer in which a core (inner layer) is a crosslinked polymer (R), an inner shell (inner layer) is a crosslinked rubber polymer (Q), and an outer shell (outermost layer) is a thermoplastic polymer (P), and a four-layer polymer elastomer in which a core (inner layer) is a crosslinked rubber polymer (Q), a first inner shell (inner layer) is a crosslinked polymer (R), a second inner shell (inner layer) is a crosslinked rubber polymer (Q), and an outer shell (outermost layer) is a thermoplastic polymer (P).

From the viewpoint of transparency, it is preferable to select a polymer contained in each layer so that a difference in refractive index between adjacent layers is preferably less than 0.005, more preferably less than 0.004, and still more preferably less than 0.003.

A mass ratio of the inner layer to the outermost layer in the multilayer copolymer elastomer is preferably 60/40 to 95/5 and more preferably 70/30 to 90/10. In the inner layer, a proportion occupied by the layer containing the crosslinked rubber polymer (Q) is preferably 20 to 70% by mass and more preferably 30 to 50% by mass.

The multilayer copolymer elastomer has an average particle diameter of preferably 0.05 to 3 $\mu$m, more preferably 0.1 to 2 $\mu$m, and still more preferably 0.2 to 1 **$\mu$m.** When the multilayer copolymer elastomer has the average particle diameter within the above range, in particular, a multilayer copolymer elastomer having an average particle diameter of 0.2 to 1 $\mu$m is used, toughness can be expressed by blending a small amount of the multilayer copolymer elastomer, and thus, rigidity or surface hardness is not impaired. Note that the average particle diameter herein is an average value in a volume-based particle diameter distribution measured by a light scattering method.

The thermoplastic polymer (P) is a polymer formed of a methacrylic acid alkyl ester unit having an alkyl group having 1 to 8 carbon atoms, and if necessary, a monofunctional monomer unit other than the methacrylic acid alkyl ester. The thermoplastic polymer (P) preferably contains no polyfunctional monomer unit.

The amount of the methacrylic acid alkyl ester unit having an alkyl group having 1 to 8 carbon atoms constituting the thermoplastic polymer (P) is preferably 80 to 100% by mass and more preferably 85 to 95% by mass with respect to the mass of the thermoplastic polymer (P).

As the methacrylic acid alkyl ester having an alkyl group having 1 to 8 carbon atoms (hereinafter, referred to as methacrylic acid C1-8 alkyl ester), for example, methyl methacrylate is preferable.

The amount of the monofunctional monomer unit other than the methacrylic acid C1-8 alkyl ester constituting the thermoplastic polymer (P) is preferably 0 to 20% by mass and more preferably 5 to 15% by mass with respect to the mass of the thermoplastic polymer (P).

Examples of the monofunctional monomer other than the methacrylic acid C1-8 alkyl ester include acrylic acid esters such as methyl acrylate, ethyl acrylate, butyl acrylate, 2-ethylhexyl acrylate, and propyl acrylate; and aromatic vinyl compounds such as styrene.

The outermost layer may be a single layer formed of one thermoplastic polymer (P) or a multilayer formed of two or more thermoplastic polymers (P).

The amount of the thermoplastic polymer (P) is preferably 40 to 75% by mass, more preferably 45 to 70% by mass, and still more preferably 50 to 65% by mass, with respect to the amount of the multilayer copolymer elastomer.

The layer of the crosslinked elastic body as the inner layer includes an intermediate layer formed of the crosslinked rubber polymer (Q) and an inner layer formed of the crosslinked polymer (R) and in contact with the intermediate layer so as to cover the intermediate layer.

The crosslinked polymer (R) contains a methyl methacrylate unit, a monofunctional monomer unit other than methyl methacrylate, and a polyfunctional monomer unit.

The amount of the methyl methacrylate unit constituting the crosslinked polymer (R) is preferably 40 to 98.5% by mass and more preferably 45 to 95% by mass with respect to the mass of the crosslinked polymer (R).

The amount of the monofunctional monomer unit other than methyl methacrylate constituting the crosslinked polymer (R) is preferably 1 to 59.5% by mass and more preferably 5 to 55% by mass with respect to the mass of the crosslinked polymer (R).

Examples of the monofunctional monomer other than methyl methacrylate include acrylic acid esters such as methyl acrylate, ethyl acrylate, butyl acrylate, 2-ethylhexyl acrylate, and propyl acrylate; and aromatic vinyl compounds such as styrene.

The amount of the polyfunctional monomer unit constituting the crosslinked polymer (R) is preferably 0.05 to 0.4% by mass and more preferably 0.1 to 0.3% by mass with respect to the mass of the crosslinked polymer (R).

Examples of the polyfunctional monomer include ethylene glycol dimethacrylate, propylene glycol dimethacrylate, triethylene glycol dimethacrylate, hexanediol dimethacrylate, ethylene glycol diacrylate, propylene glycol diacrylate, triethylene glycol diacrylate, allyl methacrylate, and triallyl isocyanurate.

The amount of the crosslinked polymer (R) is preferably 5 to 40% by mass, more preferably 7 to 35% by mass, and still more preferably 10 to 30% by mass, with respect to the amount of the multilayer copolymer elastomer.

The crosslinked rubber polymer (Q) contains an acrylic acid alkyl ester unit having an alkyl group having 1 to 8 carbon atoms and/or a conjugated diene unit, and a polyfunctional monomer unit.

The amount of the acrylic acid alkyl ester unit having an alkyl group having 1 to 8 carbon atoms and/or the conjugated diene unit constituting the crosslinked rubber polymer (Q) is preferably 85 to 99% by mass and more preferably 95 to 98% by mass with respect to the amount of the crosslinked rubber polymer (Q).

Examples of the acrylic acid alkyl ester having an alkyl group having 1 to 8 carbon atoms include methyl acrylate, ethyl acrylate, butyl acrylate, 2-ethylhexyl acrylate, and propyl acrylate.

Examples of the conjugated diene unit include 1,3-butadiene and isoprene.

Examples of the crosslinked rubber polymer (Q) containing 1,3-butadiene as a monomer include a 1,3-polybutadiene homopolymer or a copolymer containing 50% by weight or more of a 1,3-polybutadiene unit. As an example of the copolymer, for example, a butadiene-aromatic vinyl compound copolymer such as a butadiene-styrene copolymer or a butadiene-vinyltoluene copolymer is included, and a terpolymer containing 50% by weight or more of a 1,3-butadiene unit is further included. These copolymers can be usually easily produced by known emulsion polymerization.

The amount of the polyfunctional monomer unit constituting the crosslinked rubber polymer (Q) is preferably 1 to 1.7% by mass, more preferably 1.2 to 1.6% by mass, and still more preferably 1.3 to 1.5% by mass, with respect to the mass of the crosslinked rubber polymer (Q).

Examples of the polyfunctional monomer include those exemplified for the crosslinked polymer (R).

From the viewpoint of improving bending resistance, a ratio of the mass of the polyfunctional monomer unit in the crosslinked polymer (R) to the mass of the polyfunctional monomer unit in the crosslinked rubber polymer (Q) is preferably 0.05 to 0.25 and more preferably 0.1 to 0.2. A glass transition temperature of the crosslinked rubber polymer (Q) is preferably lower than a glass transition temperature of the crosslinked polymer (R).

The amount of the crosslinked rubber polymer (Q) is preferably 20 to 55% by mass, more preferably 25 to 45% by mass, and still more preferably 30 to 40% by mass, with respect to the amount of the multilayer copolymer elastomer.

In the multilayer copolymer elastomer, an average diameter (d) of the layer of the crosslinked elastic body is preferably 60 to 110 nm, more preferably 65 to 105 nm, and still more preferably 70 to 100 nm. The average diameter d (nm) of the layer of the crosslinked elastic body can be measured as follows. The resin composition containing the multilayer copolymer elastomer is molded into a 3 m-thick flat plate using a hydraulic press molding machine under conditions of a mold size of 50 mm × 120 mm, a press temperature of 250°C, a preheating time of 3 minutes, a press pressure of 50 kg/cm$^2$, a press time of 30 seconds, a cooling temperature of 20°C, a pressure during cooling of 50 kg/cm$^2$, and a cooling time of 10 minutes. The obtained flat plate is cut in a direction parallel to a long side at -100°C using a microtome to obtain a thin piece having a thickness of 40 nm, and the thin piece is subjected to a dye treatment with ruthenium. The thin piece subjected to the dye treatment is observed with a scanning transmission electron microscope (manufactured by JEOL Ltd., JSM7600F) at an acceleration voltage of 25 kV, and an image is captured. A minor axis and a major axis of the portion dyed with ruthenium (exposed portion of the thin piece of the layer of the crosslinked elastic body) are measured, (minor axis + major axis)/2 is defined as a diameter of the layer of the crosslinked elastic body, 20 or more pieces are measured, and then, a number average value (average diameter) thereof is calculated.

The multilayer copolymer elastomer is not particularly limited by the production method thereof. Examples thereof can include emulsion polymerization.

In the case of the emulsion polymerization, for example, a monomer (r) for constituting the crosslinked polymer (R) can be subjected to emulsion polymerization to obtain a latex containing the crosslinked polymer (R), a monomer (q) for constituting the crosslinked rubber polymer (Q) can be added to the latex, and the monomer (q) can be subjected to seed emulsion polymerization to obtain a latex containing the crosslinked polymer (R) and the crosslinked rubber polymer (q), and a monomer (p) for constituting the thermoplastic polymer (P) can be added to the latex, and the monomer (p) can be subjected to seed emulsion polymerization to obtain a latex containing multilayer copolymer elastomer. Note that the emulsion polymerization is a known method used for obtaining a latex containing a polymer. The seed emulsion polymerization is a method in which a polymerization reaction of monomers is performed on surfaces of seed particles. The seed emulsion polymerization is preferably used to obtain polymer particles having a core-shell structure.

The block copolymer elastomer preferably comprises a polymer block (b1) mainly containing a methacrylic acid ester unit and a polymer block (b2) containing an acrylic acid ester unit.

The block copolymer elastomer may contain only one polymer block (b1) or a plurality of polymer blocks (b1) in one molecule. In addition, the block copolymer elastomer may contain only one polymer block (b2) or a plurality of polymer blocks (b2) in one molecule.

The amount of the methacrylic acid ester unit contained in the polymer block (b1) is preferably 80% by mass or more, more preferably 90% by mass or more, still more preferably 95% by mass or more, and further still more preferably 98% by mass or more. As the methacrylic acid ester, for example, methyl methacrylate is preferable. The methacrylic acid esters can be used alone or in combination of two or more thereof for the polymer block (b1).

The amount of the polymer block (b1) contained in the block copolymer elastomer is preferably 40% by mass or more and 90% by mass or less and more preferably 45% by mass or more and 80% by mass or less, from the viewpoint of transparency, flexibility, bending resistance, impact resistance, pliability, molding processability, surface smoothness, and the like.

A glass transition temperature of the polymer block (b2) is preferably 20°C or lower and more preferably -20°C or lower.

The amount of the acrylic acid ester unit contained in the polymer block (b2) is preferably 90% by mass or more. Examples of the acrylic acid ester include n-butyl acrylate and benzyl acrylate. These acrylic acid esters can be used alone or in combination of two or more thereof for the polymer block (b2).

The polymer block (b2) may contain a monomer unit other than the acrylic acid ester as long as the object and the effect of the present invention are not hindered.

The polymer block (b2) preferably contains an acrylic acid alkyl ester unit and a (meth)acrylic acid aromatic ester unit from the viewpoint of transparency and the like. A mass ratio of the acrylic acid alkyl ester unit/the (meth)acrylic acid aromatic ester unit is preferably 50/50 to 90/10 and more preferably 60/40 to 80/20.

A binding form of the polymer block (b1) and the polymer block (b2) contained in the block copolymer elastomer is not particularly limited. For example, a block copolymer in which one end of a polymer block (b2) is connected to one end of a polymer block (b1) (b1-b2 diblock copolymer) or a block copolymer in which one end of a polymer block (b1) is connected to each of both ends of a polymer block (b2) (b1-b2-b1 triblock copolymer) is preferable.

A weight average molecular weight of the block copolymer elastomer is preferably 52,000 or more and 400,000 or less and more preferably 60,000 or more and 300,000 or less. In addition, a ratio of the weight average molecular weight to the number average molecular weight of the block copolymer elastomer is preferably 1.01 or more and 2.00 or less and more preferably 1.05 or more and 1.60 or less. The weight average molecular weight and the number average molecular weight of the block copolymer elastomer can be appropriately set from the viewpoint of moldability, tensile strength, appearance, and the like. The weight average molecular weight and the number average molecular weight are values in terms of standard polystyrene measured by gel permeation chromatography (GPC).

The block copolymer elastomer is not particularly limited by the production method thereof, and can be obtained by a known method. For example, a method including performing living polymerization on monomers constituting each polymer is generally used. As the living polymerization method, a method including performing anionic polymerization in the presence of an organic alkali metal compound and an organoaluminum compound because a high purity block copolymer elastomer is obtained, a molecular weight or a composition ratio is easily controlled, and the cost is low.

(Acrylic Resin Composition)

In the acrylic resin composition of the present invention, a mass ratio of the acrylic copolymer (A)/the elastomer (B) is 99/1 to 51/49, preferably 95/5 to 55/45, and more preferably 90/10 to 60/40, from the viewpoint of impact resistance and surface hardness.

The acrylic resin composition of the present invention has a melt flow rate of preferably 1 g/10 min or more, more preferably 1.5 to 35 g/10 min, and still more preferably 2 to 20 g/10 min, under conditions of 230°C and a load of 3.8 kg. Note

that the melt flow rate is a value of a melt mass flow rate measured in accordance with JIS K7210.

A glass transition temperature of the acrylic resin composition of the present invention is preferably 100 to 160°C, more preferably 105 to 155°C, and still more preferably 110 to 150°C. When the glass transition temperature is 100°C or lower, heat resistance and the like tend to be deteriorated, and when the glass transition temperature is 160°C or higher, moldability and the like tend to be deteriorated.

In the acrylic resin composition of the present invention, a softening temperature of the molded article is preferably 110°C or higher, more preferably 115°C or higher, and still more preferably 120°C or higher, when measured by the method specified in the B50 method of JIS K7206. When the softening temperature is 110°C or higher, the molded article is excellent in heat resistance and dimensional stability at a high temperature.

The acrylic resin composition according to the present invention has a saturated water absorption rate of 2.5% or less, more preferably 2.1% or less, and still more preferably 2.0% or less, when measured under the same conditions as those for measurement of the saturated water absorption rate of the acrylic copolymer (A). When the saturated water absorption rate is 2.5% or less, dimensional stability at a high humidity is excellent.

The acrylic resin composition of the present invention may contain a filler, if necessary, as long as the effect of the present invention is not impaired. Examples of the filler can include calcium carbonate, talc, carbon black, titanium oxide, silica, clay, barium sulfate, and magnesium carbonate. The amount of the filler that can be contained in the resin composition of the present invention is preferably 3% by mass or less and more preferably 1.5% by mass or less.

The acrylic resin composition of the present invention may contain other polymers as long as the effect of the present invention is not impaired. Examples of the other polymers can include polyolefin resins such as polyethylene, polypropylene, polybutene-1, poly-4-methylpentene-1, polynorbornene; an ethylene-based ionomer; styrene resins such as polystyrene, a styrene-maleic anhydride copolymer, high impact polystyrene, an AS resin, an ABS resin, an AES resin, an AAS resin, an ACS resin, and an MBS resin; a methyl methacrylate-based polymer and a methyl methacrylate-styrene copolymer other than the acrylic copolymer (A); polyester resins such as polyethylene terephthalate and polybutylene terephthalate; polyamides such as Nylon 6, Nylon 66, and a polyamide elastomer; polyvinyl chloride, polyvinylidene chloride, polyvinyl alcohol, an ethylene-vinyl alcohol copolymer, polyacetal, polyvinylidene fluoride, polyurethane, a phenoxy resin, modified polyphenylene ether, polyphenylene sulfide, and a silicone modified resin; silicone rubber; styrene-based thermoplastic elastomers such as SEPS, SEBS, and SIS; and olefin rubber such as IR, EPR, and EPDM. The amount of the other polymers that can be contained in the resin composition of the present invention is preferably 10% by mass or less, more preferably 5% by mass or less, and most preferably 0% by mass.

The acrylic resin composition of the present invention may contain additives such as an antioxidant, a heat deterioration inhibitor, an ultraviolet absorber, a light stabilizer, a lubricant, a release agent, a polymer processing aid, an antistatic agent, a flame retardant, a dye and a pigment, a light diffusing agent, an organic dye, a delustering agent, and a fluorescent substance, in a range in which the effect of the present invention is not impaired.

The antioxidant is effective in preventing oxidative deterioration of the resin by itself in the presence of oxygen. Examples of the antioxidant include a phosphorus-based antioxidant, a hindered phenol-based antioxidant, and a thioether-based antioxidant. These antioxidants can be used alone or in combination of two or more thereof. Among them, a phosphorus-based antioxidant or a hindered phenol-based antioxidant is preferable, and a combination of a phosphorus-based antioxidant and a hindered phenol-based antioxidant is preferable, from the viewpoint of an effect of preventing deterioration of optical properties due to coloring.

In a case where a combination of a phosphorus-based antioxidant and a hindered phenol-based antioxidant is used, proportions thereof are not particularly limited, and a mass ratio of the phosphorus-based antioxidant/the hindered phenol-based antioxidant is preferably 1/5 to 2/1 and more preferably 1/2 to 1/1.

Examples of the phosphorus-based antioxidant include 2,2-methylenebis(4,6-di-t-butylphenyl)octylphosphite (manufactured by ADEKA Corporation; trade name: ADK STAB HP-10), tris(2,4-di-t-butylphenyl)phosphite (manufactured by Ciba Specialty Chemicals K.K.; trade name: IRUGAFOS168), and 3,9-bis(2,6-di-tert-butyl-4-methylphenoxy)-2,4,8,10-tetraoxa-3,9-diphosphaspiro[5.5]undecane (manufactured by ADEKA Corporation; trade name: ADK STAB PEP-36).

Examples of the hindered phenol-based antioxidant include pentaerythrityl-tetrakis[3-(3,5-di-t-butyl-4 hydroxyphenyl)propionate] (manufactured by Ciba Specialty Chemicals K.K.; trade name: IRGANOX1010) and octadecyl-3-(3,5-dit-butyl-4 hydroxyphenyl)propionate (manufactured by Ciba Specialty Chemicals K.K.; trade name: IRGANOX1076).

Examples of the heat deterioration inhibitor is a compound that can prevent heat deterioration of the resin by scavenging a polymer radical when exposed to high heat in a substantially oxygen-free state, and examples thereof include 2-t-butyl-6-(3'-t-butyl-5'-methyl-hydroxybenzyl)-4-methylphenyl acrylate (manufactured by Sumitomo Chemical Co., Ltd., trade name: Sumilizer GM), and 2,4-di-t-amyl-6-(3',5'-di-t-amyl-2'-hydroxy-$\alpha$-methylbenzyl)phenylacrylate (manufactured by Sumitomo Chemical Co., Ltd., trade name: Sumilizer GS).

The ultraviolet absorber is a compound having an ability to absorb ultraviolet rays. The ultraviolet absorber is a compound having a function of mainly converting light energy into heat energy.

Examples of the ultraviolet absorber can include benzophenones, benzotriazoles, triazines, benzoates, salicylates, cyanoacrylates, oxalic anilides, malonic acid esters, and formamidines. These ultraviolet absorbers may be used alone or in a combination of two or more thereof. Among them, benzotriazoles, triazines, or an ultraviolet absorber having a maximum value εmax of a molar absorption coefficient at a wavelength of 380 to 450 nm of 1,200 $dm^3mol^{-1}cm^{-1}$ or less is preferable.

As the benzotriazoles, 2-(2H-benzotriazol-2-yl)-4-(1,1,3,3-tetramethylbutyl)phenol (manufactured by BASF SE; trade name: TINUVIN329), 2-(2H-benzotriazol-2-yl)-4,6-bis(1-methyl-1-phenylethyl)phenol (manufactured by BASF SE; trade name: TINUVIN234), 2,2'-methylenebis[6-(2H-benzotriazol-2-yl)-4-tert-octylphenol] (manufactured by ADEKA Corporation; trade name: LA-31), 2-(5-octylthio-2H-benzotriazol-2-yl)-6-tert-butyl-4-methylphenol, and the like are preferable.

In addition, in a case where it is desired to efficiently absorb a short wavelength of 380 nm or less, a triazine ultraviolet absorber is preferably used. Examples of such an ultraviolet absorber can include 2,4,6-tris(2-hydroxy-4-hexyloxy-3-methylphenyl)-1,3,5-triazine (manufactured by ADEKA Corporation; trade name: LA-F70), a hydroxyphenyltriazine-based ultraviolet absorber that is an analog thereof (manufactured by BASF SE; trade name: TINUVIN477, TINUVIN460, or TINUVIN479), and 2,4-diphenyl-6-(2-hydroxy-4-hexyloxyphenyl)-1,3,5-triazine.

Note that the maximum value $\varepsilon_{max}$ of the molar absorption coefficient of the ultraviolet absorber is measured as follows. 10.00 mg of an ultraviolet absorber is added to 1 L of cyclohexane and dissolved so that there is no undissolved matter when visually observed. This solution is injected into a quartz glass cell with a size of 1 cm × 1 cm × 3 cm, and an absorbance at a wavelength of 380 to 450 nm is measured using a spectrophotometer (manufactured by Hitachi, Ltd.; trade name: U-3410). The maximum value $\varepsilon_{max}$ of the molar absorption coefficient is calculated by the following equation using a molecular weight ($M_{UV}$) of the ultraviolet absorber and a maximum value ($A_{max}$) of the measured absorbance.

$$\varepsilon_{max} = [A_{max}/(10 \times 10^{-3})] \times M_{UV}$$

The light stabilizer is a compound having a function of scavenging a radical mainly generated by oxidation with light. Examples thereof include hindered amines such as a compound having a 2,2,6,6-tetra-alkyl-piperidine skeleton.

Examples of the lubricant include stearic acid, behenic acid, stearoamide acid, methylenebisstearoamide, triglyceride hydroxystearate, paraffin wax, ketone wax, octyl alcohol, and hardened oil.

The release agent is a compound having a function of facilitating mold release of a molded product from a mold, and examples thereof include higher alcohols such as cetyl alcohol and stearyl alcohol, and glycerin higher fatty acid esters such as stearic acid monoglyceride and stearic acid diglyceride. Since the use of the glycerin higher fatty acid ester may cause gel-like foreign matters, it is preferable to use higher alcohols.

The polymer processing aid is a compound that exhibits an effect on thickness accuracy and thinning when molding the acrylic resin composition. The polymer processing aid can be usually produced by an emulsion polymerization method. The polymer processing aid is preferably polymer particles having a particle diameter of 0.05 to 0.5 μm.

The polymer particles may be single layer particles formed of a polymer having a single composition ratio and a single intrinsic viscosity, or may be multilayer particles formed of two or more polymers having different composition ratios or intrinsic viscosities. Among them, particles having a two-layer structure in which a polymer layer having a low intrinsic viscosity is included as an inner layer and a polymer layer having a high intrinsic viscosity of 5 dl/g or more is included as an outer layer are preferable. The polymer processing aid preferable has an intrinsic viscosity of 3 to 6 dl/g. When the intrinsic viscosity is too small, the effect of improving moldability is low. When the intrinsic viscosity is too large, melt fluidity of the acrylic resin composition tends to be lowered.

Examples of the antistatic agent include alkylsulfonic acid salts such as sodium heptyl sulfonate, sodium octyl sulfonate, sodium nonyl sulfonate, sodium decyl sulfonate, sodium dodecyl sulfonate, sodium cetyl sulfonate, sodium octadecyl sulfonate, sodium diheptyl sulfonate, potassium heptyl sulfonate, potassium octyl sulfonate, potassium nonyl sulfonate, potassium decyl sulfonate, potassium dodecyl sulfonate, potassium cetyl sulfonate, potassium octadecyl sulfonate, potassium diheptyl sulfonate, lithium heptyl sulfonate, lithium octyl sulfonate, lithium nonyl sulfonate, lithium decyl sulfonate, lithium dodecyl sulfonate, lithium cetyl sulfonate, lithium octadecyl sulfonate, and lithium diheptyl sulfonate.

Examples of the flame retardant include a metal hydrate having a hydroxyl group or crystalline water, such as magnesium hydroxide, aluminum hydroxide, hydrated aluminum silicate, hydrated magnesium silicate, or hydrotalcite, a phosphoric acid compound such as polyphosphoric acid amine or phosphoric acid ester, and a silicon compound, and a phosphoric acid-based flame retardant such as trimethyl phosphate, triethyl phosphate, tripropyl phosphate, tributyl phosphate, tripentyl phosphate, trihexyl phosphate, tricyclohexyl phosphate, triphenyl phosphate, tricresyl phosphate, trixylenyl phosphate, dimethylethyl phosphate, methyldibutyl phthalate, ethyldipropyl phosphate, or hydroxyphenyl diphenyl phosphate is preferable.

Examples of the dye and the pigment include a red organic pigment such as para red, fire red, pyrazolone red, thioindigo red, or perylene red, a blue organic pigment such as cyanine blue or indanthrene blue, and a green organic

pigment such as cyanine green or naphthol green, and one or two or more of these dyes and pigments can be used.

As the organic dye, a compound having a function of converting ultraviolet rays into visible rays is preferably used.

Examples of the light diffusing agent or the delustering agent can include glass fine particles, polysiloxane-based crosslinked fine particles, crosslinked polymer fine particles, talc, calcium carbonate, and barium sulfate.

Examples of the fluorescent substance can include a fluorescent pigment, a fluorescent dye, a fluorescent white dye, a fluorescent brightening agent, and a fluorescent bleach.

These additives may be used alone or in combination of two or more thereof. In addition, these additives may be added to a polymerization reaction solution when the acrylic copolymer (A) and the elastomer (B) are produced, may be added to the produced acrylic copolymer (A) or crosslinked rubber (B), or may be added when the acrylic resin composition of the present invention is prepared. The total amount of the additives contained in the acrylic resin composition of the present invention is preferably 7% by mass or less, more preferably 5% by mass or less, and still more preferably 4% by mass or less, with respect to the acrylic resin composition from the viewpoint of suppressing appearance defects of the molded article.

A method for preparing an acrylic resin composition of the present invention is not particularly limited. Examples thereof include a method of polymerizing a monomer mixture containing methyl methacrylate or the like in the presence of the elastomer (B) to produce an acrylic copolymer (A) and a method of melt-kneading the acrylic copolymer (A) and the elastomer (B). At the time of melt-kneading, other polymers and additives may be mixed, if necessary, the acrylic copolymer (A) may be mixed with the elastomer (B) after being mixed with other polymers and additives, the elastomer (B) may be mixed with the acrylic copolymer (A) after being mixed with other polymers and additives, or other methods may be used. The kneading can be performed using a known mixer or kneader such as a kneader-ruder, an extruder, a mixing roll, or a Banbury mixer. Among them, a twin-screw extruder is preferable.

The acrylic resin composition of the present invention can be in the form of pellets or the like in order to improve convenience during storage, transportation, or molding.

The molded article of the present invention contains the acrylic resin composition of the present invention. A method for producing a molded article of the present invention is not particularly limited. Examples thereof can include melt-molding methods such as a T-die method (a lamination method, a coextrusion method, or the like), an inflation method (a coextrusion method or the like), a compression molding method, a blow molding method, a calendar molding method, a vacuum molding method, an injection molding method, (an insert method, a dichroic method, a press method, a core back method, a sandwich method, or the like), and a solution casting method. Among them, a T-die method, an inflation method, or an injection molding method is preferable from the viewpoint of high productivity, cost, and the like. The type of the molded article is not limited, a film (a planar molded article having a thickness of 5 μm or more and 250 μm or less) or a sheet (a planar molded article thicker than 250 μm) is preferable, and among them, a film is particularly preferable.

The film that is one form of the molded article of the present invention can be produced by a solution casting method, a melt-casting method, an extrusion molding method, an inflation molding method, a blow molding method, or the like. Among them, an extrusion molding method is preferable from the viewpoint of obtaining a film that is excellent in transparency, and has improved toughness, excellent handleability, and an excellent balance among toughness, surface hardness, and rigidity. The temperature of the molten resin discharged from the extruder is set to preferably 160 to 270°C and more preferably 220 to 260°C.

Among the extrusion molding methods, a T-die method is preferable from the viewpoint of obtaining a film having excellent surface smoothness, excellent specular gloss, and a low haze. In the T-die method, it is preferable that the molten resin discharged from a T-die through an extruder, a gear pump, a polymer filter, and a mixer is interposed between two or more mirror surface rolls or mirror surface belts to be formed into a film. A bank may or may not be formed when the molten resin is interposed between mirror surface rolls or mirror surface belts. The die has an automatic adjustment function of a lip opening degree, and an air gap is preferably 100 mm or less.

The mirror surface roll or the mirror surface belt is preferably formed of a metal. As the mirror surface roll, a metal rigid roll, a metal elastic roll, or the like can be used, and it is preferable to use a combination of the metal elastic roll and the metal rigid roll. In addition, temperatures of both surfaces of the mirror surface roll or the mirror surface belt are preferably 130°C or lower. In addition, it is preferable that the temperature of at least one surface of a pair of mirror surface rolls or mirror surface belts is 60°C or higher. When the temperature of the surface is set as described above, the molten resin discharged from the extruder can be cooled at a speed faster than natural cooling, and a film that is excellent in surface smoothness and has a low haze can be easily produced. A linear pressure between the pair of rolls or belts is preferably 10 N/mm or more and more preferably 30 N/mm or more. A thickness of the unstretched film obtained by extrusion molding is preferably 10 to 300 μm. The haze of the film is preferably 0.57% or less, more preferably 0.35% or less, and still more preferably 0.3% or less at a thickness of 100 μm.

The unstretched film obtained as described above may be subjected to a stretching treatment. The mechanical strength is increased by the stretching treatment, and a film that is hardly cracked can be obtained. A stretching method is

not particularly limited, and examples thereof can include a simultaneous biaxial stretching method, a sequential biaxial stretching method, and a tubular stretching method. From the viewpoint of obtaining a film that can be uniformly stretched and has high strength, a lower limit of the temperature during the stretching is a temperature higher than the glass transition temperature of the acrylic copolymer or the acrylic resin composition by 10°C, and an upper limit of the temperature during the stretching is a temperature higher than the glass transition temperature of the acrylic copolymer or the acrylic resin composition by 40°C. The stretching is usually performed at 100 to 5,000 %/min. A film with less thermal shrinkage can be obtained by performing heat fixation after the stretching. A thickness of the film after the stretching is preferably 10 to 200 μm.

A functional layer may be provided on a surface of the film that is one form of the molded article of the present invention. Examples of the functional layer can include a hard coat layer, an antiglare layer, an antireflection layer, a stacking prevention layer, a diffusion layer, an antiglare layer, an antistatic layer, an antifouling layer, and an easily slipping layer such as fine particles.

In addition, it is preferable to provide an undercoat layer on at least one surface of the film of the present invention in order to improve adhesion strength with the functional layer or to improve adhesion strength in lamination with another film via an adhesive or a pressure-sensitive adhesive.

The acrylic resin composition of the present invention is suitable as a molding material. The molded article of the present invention can be a member for various applications. Examples of specific applications can include a signboard part or a marking film such as an advertising tower, a stand signboard, a side signboard, a transom signboard, or a rooftop signboard; a display part such as a showcase, a divider, or a store display; a lighting part such as a fluorescent lamp cover, a mood lighting cover, a lamp shade, a light ceiling, a light wall, or a chandelier; an interior part such as furniture, a pendant, or a mirror; a building part such as a door, dome, a safety windowpane, a partition, a stair wainscot, a balcony wainscot, or a roof of a leisure building; a transport equipment related part such as an aircraft windshield, a pilot visor, a motorcycle, a motor boat windshield, a bus shading plate, an automobile side visor, a rear visor, a head wing, a headlight cover, an automobile interior part, or an automobile exterior part such as a bumper; an electronic equipment part such as a nameplate for audio and video, a stereo cover, a television protective mask, a vending machine, a cellular phone, or a personal computer; a medical equipment part such as an incubator or an X-ray part; an instrument related part such as a machine cover, an instrument cover, an experimental device, a ruler, a dial, or an observation window; an optical part such as a liquid crystal protective plate, a light guide plate, a light guide film, a Fresnel lens, a lenticular lens, front panels of various displays, or a diffuser plate; a transportation related part such as a road sign, a direction board, a curved mirror, or a soundproof wall; in addition, a greenhouse, a large-sized water tank, a box water tank, a bathroom member, a clock panel, a bathtub, sanitary, a desk mat, a game part, a toy, a musical instrument, a mask for fact protection during welding, a back sheet for a solar cell, a flexible solar cell front sheet, and a decorative film; and a surface material used for a personal computer, a cellular phone, furniture, a vending machine, or a bathroom member.

A laminate can be obtained by laminating a layer containing the acrylic resin composition of the present invention and another material (for example, a layer containing another thermoplastic copolymer). Examples of the other material used in the laminate can include a steel material, plastic (for example, a thermoplastic resin), wood, and glass. The laminate obtained by the present invention can be preferably used for wallpaper; an automobile interior member surface; an automobile exterior member surface such as a bumper; a mobile phone surface; a furniture surface; a computer surface; a vending machine surface; and a bathroom member surface such as a bathtub.

Since the film that is one form of the molded article of the present invention has high transparency and heat resistance, it is suitable for optical applications, and is particularly suitable for a polarizer protective film, a liquid crystal protective plate, a surface material for a portable information terminal, a display window protective film of a portable information terminal, a light guide film, a transparent conductive film with a surface to which silver nanowires or carbon nanotubes are applied, and front plate applications for various displays. Since the film of the present invention has high transparency and heat resistance, the film can be used as an infrared cut film, a crime prevention film, a scattering prevention film, a decorative film, a metal decorative film, a shrink film, and a film for in-mold labels as applications other than optical applications.

In a case where the film that is one form of the molded article of the present invention is used as a polarizer protective film or a retardation film, the film may be laminated on only one surface or both surfaces of a polarizer film. When laminated with a polarizer film, the film can be laminated with an adhesive layer or a pressure-sensitive adhesive layer. As the polarizer film, a stretched film formed of a polyvinyl alcohol-based resin and iodine can be used, and the film thickness thereof is preferably 1 to 100 μm.

[Examples]

Next, the present invention will be more specifically described with reference to Examples. Note that the present invention is not limited by the Examples.

Physical properties and the like were measured by the following method.

(Weight Average Molecular Weight)

A weight average molecular weight (Mw) of the resin obtained in each of Production Examples was determined by a gel permeation chromatography method (GPC method). A sample solution was prepared by dissolving 4 mg of a resin to be measured in 5 ml of tetrahydrofuran. A temperature of a column oven was set to 40°C, 20 μl of the sample solution was injected into an apparatus at an eluent flow rate of 0.35 ml/min, and a chromatogram was measured. 10 standard polystyrenes having a molecular weight within a range of 400 to 5,000,000 were subjected to GPC measurement, and a calibration curve showing a relationship between the holding time and the molecular weight was created. Based on the calibration curve, Mw of the resin to be measured was determined. A value corresponding to the molecular weight of the standard styrene obtained from the chromatogram measured by gel permeation chromatography (GPC) was defined as the molecular weight of the copolymer.

Apparatus: GPC apparatus HLC-8320 manufactured by Tosoh Corporation
Separation column: serially connected TSK guard column Super HZ-H, TSKgel HZM-M, and TSKgel Super HZ4000 manufactured by Tosoh Corporation
Eluent: tetrahydrofuran
Eluent flow rate: 0.35 ml/min
Column temperature: 40°C
Detection method: differential refractive index (RI)

(Each Unit Composition in Copolymer)

A carbon ratio between a phenyl group of an α-methylstyrene unit, a carbonyl group of a methyl methacrylate unit, and a phenyl group of a styrene unit was determined by $^{13}C$-NMR, and each unit composition was calculated using the carbon ratio.

(Glass Transition Temperature Tg)

The resin obtained in each of Production Examples was heated to 250°C and then cooled to room temperature, and then, a DSC curve was measured under a condition in which the temperature was raised from room temperature to 200°C at 10 °C/min using a differential scanning calorimeter (manufactured by SHIMADZU CORPORATION, DSC-50 (product number)) in accordance with JIS K7121. A glass transition temperature at the midpoint obtained from the DSC curve measured at the time of the second temperature rise was defined as the glass transition temperature in the present invention.

(Each Unit Composition of Acrylic Copolymer)

The α-methylstyrene unit and the styrene unit had the same composition as each unit composition of the precursor polymer. $^{1}H$-NMR measurement of the acrylic copolymer was performed using $^{1}H$-NMR (manufactured by Bruker Corporation, trade name: ULTRA SHIELD 400 PLUS), a content (mol%) of each of the monomer units such as the glutarimide unit, the methyl methacrylate unit, and the aromatic vinyl (α-methylstyrene and styrene) unit in the acrylic copolymer was determined, and the content (mol%) was converted into a content (% by weight) using the molecular weight of each monomer unit.

(1% Heat Weight Reduction Temperature)

The acrylic copolymer obtained in each of Production Examples and the acrylic resin composition obtained in each of Examples and Comparative Examples were heated at 10 °C/min in a nitrogen atmosphere using a thermogravimetric measurement device (manufactured by SHIMADZU CORPORATION, TGA-50), and the temperature at the time of 1% weight reduction was defined as a 1% heat weight reduction temperature.

(Vicat Softening Temperature)

The acrylic resin composition obtained in each of Examples and Comparative Examples was injection-molded under conditions of a cylinder temperature of 260°C, a mold temperature of 50°C, and an injection speed of 50 mm/sec using an injection molding machine (manufactured by Meiki Co., Ltd., M-100C), thereby obtaining a rectangular test piece having a thickness of 4 mm, a long piece of 80 mm, and a short side of 10 mm. A Vicat softening temperature (VST) of each test piece was measured according to the method described in the B50 method of JIS K7206 using an HDT tester 3M-2

manufactured by Toyo Seiki Seisaku-sho, Ltd.

(Bending Modulus)

The acrylic copolymer obtained in each of Production Examples and the acrylic resin composition obtained in each of Examples and Comparative Examples were injection-molded under conditions of a cylinder temperature of 260°C, a mold temperature of 50°C, and an injection speed of 50 mm/sec using an injection molding machine (manufactured by Meiki Co., Ltd., M-100C), thereby obtaining a rectangular test piece having a thickness of 4 mm, a long piece of 80 mm, and a short side of 10 mm. A bending modulus of each test piece was measured according to the method described in JIS K7171 using a precision universal tester Autograph AG-IS 5 kN manufactured by SHIMADZU CORPORATION.

(Saturated Water Absorption Rate)

The acrylic copolymer obtained in each of Production Examples and the acrylic resin composition obtained in each of Examples and Comparative Examples were injection-molded under conditions of a cylinder temperature of 260°C, a mold temperature of 50°C, and an injection speed of 50 mm/sec using an injection molding machine (manufactured by Meiki Co., Ltd., M-100C), thereby obtaining a square test piece having a thickness of 3 mm and one side of 50 mm. The test piece was vacuum-dried for 24 hours under conditions of a temperature of 80°C and 5 mmHg. Subsequently, the test piece was allowed to cool in a desiccator. Immediately after taking out the test piece from the desiccator, the mass (initial mass) was measured. Subsequently, the test piece was immersed in distilled water at 23°C. The test piece was taken out from the water, the water attached to the surface was wiped off, and the mass was measured. Immersion in distilled water and mass measurement were repeated until the mass was not changed. A saturated water absorption rate was calculated by the following equation using the mass (water absorption mass) when there was no mass change and the initial mass.

Saturated water absorption rate (%) = ](Water absorption mass- initial mass)/initial mass] x100

(Moldability)

The acrylic resin composition obtained in each of Examples and Comparative Examples was injection-molded under conditions of a cylinder temperature of 280°C, a mold temperature of 75°C, and a molding cycle of 1 minute using an injection molding machine (manufactured by Meiki Co., Ltd., M-100C), thereby producing a flat plate having a length of 205 mm, a width of 160 mm, and a thickness of 0.5 mm. A ratio of the resin flow length (190 mm) to the thickness was 380.
In addition, the acrylic resin composition obtained in each of Examples and Comparative Examples was extruded from a T-die having a width of 150 mm at a resin temperature of 260°C using a single-screw extruder having a screw diameter of 20 mm, thereby obtaining a single-layer film having a width of 100 mm and a thickness of 80 **μm.**
The appearance of the flat plate was visually observed. The quality of moldability was determined based on the presence or absence of molding defects such as sink marks and silver. In addition, the appearance of the film was visually observed. The quality of moldability was determined based on the presence or absence of bubbles or gel particles.

A: No sink mark and no occurrence of silver in the molded product, and no bubbles and no defect of gelation in the film.
C: Occurrence of sink marks or silver in the molded product, or occurrence of bubbles or defect of gelation in the film.

(Dimensional Stability)

The acrylic resin composition obtained in each of Examples and Comparative Examples was injection-molded under conditions of a cylinder temperature of 280°C, a mold temperature of 75°C, and a molding cycle of 1 minute using an injection molding machine (manufactured by Meiki Co., Ltd., M-100C), thereby producing a flat plate having a length of 205 mm, a width of 160 mm, and a thickness of 0.5 mm. A ratio of the resin flow length (190 mm) to the thickness was 380.
The flat plate was placed in a thermostatic device at (1) a temperature of 60°C and a relative humidity of 90% and (2) a temperature of 90°C and a relative humidity of 60%, and the flat plate was left to stand in the atmosphere for 500 hours. The flat plate was taken out from the thermostatic device, and a dimension in a length direction was measured. A dimensional change rate from the dimension in the length direction before being put into the thermostatic device was calculated.
A dimensional change rate of 0.3% or less under both the conditions (1) and (2) was marked with "H",

a dimensional change rate of 0.3% or less under any one of the conditions (1) and (2) was marked with "A", and
a dimensional change rate of greater than 0.3% under both the conditions (1) and (2) was marked with "C".

(Pencil Hardness)

The acrylic resin composition obtained in each of Examples and Comparative Examples was injection-molded under conditions of a cylinder temperature of 260°C, a mold temperature of 50°C, and an injection speed of 50 mm/sec using an injection molding machine (manufactured by Meiki Co., Ltd., M-100C), thereby obtaining a square test piece having a thickness of 3 mm and one side of 50 mm.
In addition, the acrylic resin composition obtained in each of Examples and Comparative Examples was extruded from a T-die having a width of 150 mm at a resin temperature of 260°C using a single-screw extruder having a screw diameter of 20 mm, thereby obtaining a single-layer film having a width of 100 mm and a thickness of 80 μm.
A pencil hardness of each of the test piece and the single-layer film was measured at a load of 0.75 Kg in accordance with JIS K5600-5-4.

A: Pencil hardness of each of the test piece and the single-layer film of H or more
C: Pencil hardness of the test piece or the single-layer film of F or less

(Precursor Polymer)

Precursor polymers A-a to A-f and A-h according to the present Production Example were produced by the following method.

Precursor Polymers A-a to A-f and A-h

Purified methyl methacrylate (MMA), α-methylstyrene (αMSt), styrene (St), 2,2'-azobis(2-methylpropionitrile) (AIBN), and n-octyl mercaptan (n-OM) were charged into an autoclave with a stirrer in proportions shown in Table 1, and the mixture was uniformly dissolved, thereby obtaining a polymerization raw material. Nitrogen gas was blown into the reaction raw material to remove dissolved oxygen to 3 ppm. Subsequently, the inside of a continuous flow tank-type reactor equipped with a brine-cooled condenser was replaced with nitrogen gas. A polymerization raw material was continuously supplied into the tank-type reactor at a constant flow rate so as to have the average retention time shown in Table 1, the polymerization raw material was subjected to bulk polymerization at the polymerization temperature shown in Table 1, and a solution containing a precursor polymer was continuously discharged from the tank-type reactor. Note that the pressure in the tank-type reactor was regulated by a pressure regulating valve connected to the brine-cooled condenser. The polymerization conversion rate was the value as shown in Table 1. Subsequently, the solution discharged from the reactor was heated to 230°C and supplied to a twin-screw extruder controlled to 240°C. In the twin-screw extruder, a volatile matter composed of an unreacted monomer as a main component was separated and removed, and the precursor polymer was extruded as a strand. The strand was cut with a pelletizer to obtain a precursor polymer. A weight average molecular weight Mw, a ratio of each monomer unit, and a glass transition temperature of the obtained precursor polymer were measured. The results are shown in Table 1.

Precursor Polymer A-g

An MS resin (a copolymer of methyl methacrylate (MMA) and styrene (St)) was produced according to the production method of a copolymer (A) described in the section of [Examples] in JP2003-231785A. A precursor polymer A-g having Mw = 95,000, Tg = 116°C, and a content of a styrene monomer unit of 10% by mass was obtained by changing a mass ratio of MMA, St, and t-dodecyl mercaptan (t-DM) to be charged into an autoclave.

(Acrylic Copolymer (A))

Production Example 1

To a transport part of a twin-screw extruder (manufactured by The Japan Steel Works, LTD., trade name: TEX30α-77AW-3V) in which the transport part, a melt-kneading part, a devolatilization part, and a discharge part were included and a screw rotation speed and a temperature were set to 100 rpm and 230°C, respectively, the acrylic copolymer [A-a] was supplied at 10 kg/hr, and in the melt-kneading part installed in a kneading block, the amount of monomethylamine was adjusted so that the content of the structural unit derived from glutarimide was as shown in Table 1, and the monomethylamine was injected through an additive supply port of the twin-screw extruder to react the acrylic copolymer [A-a] and the monomethylamine. Note that most of the melt-kneading part includes a kneading disc, and seal elements are attached to both ends thereof. In the devolatilization part, a by-product and excessive monomethylamine were volatilized from the molten resin passed through the melt-kneading part and discharged through a plurality of vents.

The molten resin discharged as a strand from a die provided at the end of the discharge part of the twin-screw extruder was cooled in a water tank, and then, the strand was cut with a pelletizer, thereby obtaining a pellet-like imidized resin [A-1]. A content of a structural unit derived from glutarimide in the imidized resin [A-1] was 9 wt%. The composition and physical properties of the imidized resin [A-1] are shown in Table 1.

Production Example 2

An imidized resin [A-2] was obtained in the same manner as that of Example 1, except that the acrylic copolymer [A-b] was used instead of the acrylic copolymer [A-a] and the amount of the monomethylamine added was changed so that the content of the structural unit derived from glutarimide was 7 wt%. The composition and physical properties of the imidized resin [A-2] are shown in Table 1.

Production Example 3

An imidized resin [A-3] was obtained in the same manner as that of Example 1, except that the acrylic copolymer [A-b] was used instead of the acrylic copolymer [A-a] and the amount of the monomethylamine added was changed so that the content of the structural unit derived from glutarimide was 15 wt%. The composition and physical properties of the imidized resin [A-3] are shown in Table 1.

Production Example 4

An imidized resin [A-4] was obtained in the same manner as that of Example 1, except that the acrylic copolymer [A-c] was used instead of the acrylic copolymer [A-a] and the amount of the monomethylamine added was changed so that the content of the structural unit derived from glutarimide was 8 wt%. The composition and physical properties of the imidized resin [A-4] are shown in Table 1.

Production Example 5

An imidized resin [A-5] was obtained in the same manner as that of Example 1, except that the acrylic copolymer [A-d] was used instead of the acrylic copolymer [A-a] and the amount of the monomethylamine added was changed so that the content of the structural unit derived from glutarimide was 9 wt%. The composition and physical properties of the imidized resin [A-5] are shown in Table 1.

Production Example 6

An imidized resin [A-6] was obtained in the same manner as that of Example 1, except that the acrylic copolymer [A-d] was used instead of the acrylic copolymer [A-a] and the amount of the monomethylamine added was changed so that the content of the structural unit derived from glutarimide was 23 wt%. The composition and physical properties of the imidized resin [A-6] are shown in Table 1.

Production Example 7

An imidized resin [A-7] was obtained in the same manner as that of Example 1, except that the acrylic copolymer [A-d] was used instead of the acrylic copolymer [A-a] and the amount of the ammonia added instead of monomethylamine was changed so that the content of the structural unit derived from glutarimide was 15 wt%. The composition and physical properties of the imidized resin [A-7] are shown in Table 1.

Production Example 8

An imidized resin [A-8] was obtained in the same manner as that of Example 1, except that the acrylic copolymer [A-e] was used instead of the acrylic copolymer [A-a] and the amount of the monomethylamine added was changed so that the content of the structural unit derived from glutarimide was 19 wt%. The composition and physical properties of the imidized resin [A-8] are shown in Table 1.

Production Example 9

An imidized resin [A-9] was obtained in the same manner as that of Example 1, except that the acrylic copolymer [A-f] was used instead of the acrylic copolymer [A-a] and the amount of the monomethylamine added was changed so that

the content of the structural unit derived from glutarimide was 12 wt%. The composition and physical properties of the imidized resin [A-9] are shown in Table 1.

Production Example 10

An imidized resin [A-10] was obtained in the same manner as that of Example 1, except that the acrylic copolymer [A-b] was used instead of the acrylic copolymer [A-a] and the amount of the monomethylamine added was changed so that the content of the structural unit derived from glutarimide was 45 wt%. The composition and physical properties of the imidized resin [A-10] are shown in Table 1.

Production Example 11

An imidized resin [A-11] was obtained in the same manner as that of Example 1, except that the acrylic copolymer [A-g] was used instead of the acrylic copolymer [A-a] and the amount of the monomethylamine added was changed so that the content of the structural unit derived from glutarimide was 10 wt%. The composition and physical properties of the imidized resin [A-11] are shown in Table 1.

Production Example 12

An imidized resin [A-12] was obtained in the same manner as that of Example 1, except that the acrylic copolymer [A-g] was used instead of the acrylic copolymer [A-a] and the amount of the monomethylamine added was changed so that the content of the structural unit derived from glutarimide was 44 wt%. The composition and physical properties of the imidized resin [A-12] are shown in Table 1.

Production Example 13

An imidized resin [A-13] was obtained in the same manner as that of Example 1, except that the acrylic copolymer [A-h] was used instead of the acrylic copolymer [A-a] and the amount of the monomethylamine added was changed so that the content of the structural unit derived from glutarimide was 24 wt%. The composition and physical properties of the imidized resin [A-13] are shown in Table 1.

Production Example 14

An imidized resin [A-14] was obtained in the same manner as that of Example 1, except that the acrylic copolymer [A-b] was used instead of the acrylic copolymer [A-a] and the acrylic copolymer was passed through the extruder without adding an imidizing agent. The composition and physical properties of the imidized resin [A-14] are shown in Table 1.

[Table 1]

| | Production Example 1 | Production Example 2 | Production Example 3 | Production Example 4 | Production Example 5 | Production Example 6 | Production Example 7 | Production Example 8 | Production Example 9 | Production Example 10 | Production Example 11 | Production Example 12 | Production Example 13 | Production Example 14 |
|---|---|---|---|---|---|---|---|---|---|---|---|---|---|---|
| Imidized polymer | A-1 | A-2 | A-3 | A- 4 | A-5 | A- 6 | A-7 | A-8 | A- 9 | A-10 | A-11 | A-12 | A-13 | A-14 |
| Content of MMA structural unit [wt%] | 83 | 81 | 73 | 74 | 72 | 58 | 66 | 44 | 84 | 43 | 80 | 46 | 8 | 88 |
| Content of α-MSt structural unit [wt%] | 8 | 12 | 12 | 18 | 13 | 13 | 13 | 19 | 4 | 12 | - | - | 20 | 12 |
| Content of St structural unit [wt%] | - | - | - | - | 6 | 6 | 6 | 18 | - | - | 10 | 10 | 48 | - |
| Content of structural unit derived from unsubstituted glutarimide [wt%] | - | - | - | - | - | - | 15 | - | - | - | - | - | - | - |
| Content of structural unit derived from N-substituted glutarimide [wt%] | 9 | 7 | 15 | 8 | 9 | 23 | - | 19 | 12 | 45 | 10 | 44 | 24 | - |
| Glass transition temperature [°C] | 130 | 133 | 143 | 137 | 135 | 142 | 143 | 138 | 133 | 154 | 119 | 139 | 127 | 130 |
| Saturated water absorption rate [wt%] | 2.1 | 1.6 | 1.7 | 1.5 | 1.8 | 2.2 | 2.4 | 1.2 | 3.2 | 3.5 | 2.0 | 4.4 | 2.7 | 1.6 |
| Weight average molecular weight [-] | 90000 | 108000 | 105000 | 88000 | 80000 | 80000 | 80000 | 73600 | 134000 | 82000 | 94000 | 92000 | 187000 | 110000 |
| Bending modulus [MPa] | 3260 | 3280 | 3410 | 3370 | 3340 | 3540 | 3800 | 3580 | 3260 | 4100 | 3260 | 3850 | 3420 | 3160 |

(continued)

| | Production Example 1 | Production Example 2 | Production Example 3 | Production Example 4 | Production Example 5 | Production Example 6 | Production Example 7 | Production Example 8 | Production Example 9 | Production Example 10 | Production Example 11 | Production Example 12 | Production Example 13 | Production Example 14 |
|---|---|---|---|---|---|---|---|---|---|---|---|---|---|---|
| Imidized polymer | A-1 | A-2 | A-3 | A- 4 | A-5 | A- 6 | A-7 | A-8 | A- 9 | A-10 | A-11 | A-12 | A-13 | A-14 |
| 1 % heat weight reduction temperature ($N_2$) [°C] | 276 | 270 | 303 | 302 | 305 | 329 | 305 | 518 | 305 | 320 | 270 | 300 | 341 | 260 |
| Precursor polymer | A-a | A-b | A-b | A-c | A-d | A-d | A-d | A-e | A- f | A-b | A-g | A-g | A-h | A-b |
| Polymerization conversion rate [%] | 40 | 37 | 37 | 35 | 41 | 41 | 41 | 42 | 44 | 37 | - | - | 19 | 37 |
| Average retention time [hr] | 3.0 | 3.0 | 3.0 | 3.0 | 4.0 | 4.0 | 4.0 | 3.5 | 3.0 | 3.0 | - | - | 3.5 | 3.0 |
| Polymerization temperature [°C] | 120 | 120 | 120 | 120 | 130 | 130 | 130 | 130 | 120 | 120 | - | - | 110 | 120 |
| Content of MMA structural unit [wt%] | 92 | 88 | 88 | 82 | 81 | 81 | 81 | 63 | 96 | 88 | 90 | 90 | 32 | 88 |
| Content of $\alpha$-MSt structural unit [wt%] | 8 | 12 | 12 | 18 | 13 | 13 | 13 | 19 | 4 | 121 | - | - | 20 | 12 |
| Content of St structural unit [wt%] | - | - | - | - | 6 | 6 | 6 | 18 | - | - | 10 | 10 | 48 | - |
| Weight average molecular weight [-] | 92000 | 110000 | 110000 | 90000 | 82000 | 82000 | 82000 | 75600 | 141000 | 110000 | 95000 | 95000 | 189000 | 110,000 |
| Glass transition temperature [°C] | 127 | 130 | 130 | 134 | 128 | 128 | 128 | 117 | 123 | 130 | 116 | 116 | 110 | 130 |
| Charged amount of polymerization initiator AIBN (ppm) | 400 | 400 | 400 | 400 | 400 | 400 | 400 | 250 | 400 | 400 | - | - | 250 | 400 |

(continued)

| Precursor polymer | A-a | A-b | A-b | A-c | A-d | A-d | A-d | A-e | A- f | A-b | A-g | A-g | A-h | A-b |
|---|---|---|---|---|---|---|---|---|---|---|---|---|---|---|
| Charged amount of chain transfer agent n-OM (phr) | 0.025 | 0 | 0 | 0 | 0.1 | 0.1 | 0.1 | 0.15 | 0 | 0 | 0 | 0 | 0.02 | 0 |
| Charged amount of chain transfer agent t-DM (phr) | 0 | 0 | 0 | 0 | 0 | 0 | 0 | 0 | 0 | 0 | 0.33 | 0.33 | 0 | 0 |

(Elastomer)

Production Example 15

1,050 parts by mass of ion-exchanged water, 0.44 parts by mass of sodium polyoxyethylene tridecyl ether acetate, and 0.7 parts by mass of sodium carbonate were charged into a reactor equipped with a stirrer, a thermometer, a nitrogen gas introduction tube, a monomer introduction tube, and a reflux condenser, and the inside of the reactor was sufficiently replaced with nitrogen gas. Subsequently, the internal temperature was 80°C. 0.25 parts by mass of potassium persulfate was added thereto, and stirring was performed for 5 minutes. 245 parts by mass of a monomer mixture containing 95.4% by mass of methyl methacrylate, 4.4% by mass of methyl acrylate, and 0.2% by mass of allyl methacrylate was continuously added dropwise thereto over 60 minutes. After completion of the dropwise addition, a polymerization reaction was further performed for 30 minutes so that a polymerization conversion rate was 98% or more.

Subsequently, 0.32 parts by mass of potassium persulfate was added into the same reactor, and stirring was performed for 5 minutes. Thereafter, 315 parts by mass of a monomer mixture containing 80.5% by mass of butyl acrylate, 17.5% by mass of styrene, and 2% by mass of allyl methacrylate was continuously added dropwise thereto over 60 minutes. After completion of the dropwise addition, a polymerization reaction was further performed for 30 minutes so that a polymerization conversion rate was 98% or more.

Next, 0.14 parts by mass of potassium persulfate was added into the same reactor, and stirring was performed for 5 minutes. Thereafter, 140 parts by mass of a monomer mixture containing 95.2% by mass of methyl methacrylate, 4.4% by mass of methyl acrylate, and 0.4% by mass of n-octyl mercaptan was continuously added dropwise over 30 minutes. After completion of the dropwise addition, a polymerization reaction was further performed for 60 minutes so that a polymerization conversion rate was 98% or more. By the above operation, a latex containing a multilayer copolymer elastomer was obtained. The latex was frozen and solidified. Subsequently, the latex was washed with water and dried to obtain a multilayer copolymer elastomer (B-1). An average particle diameter of the multilayer copolymer elastomer (B-1) was 0.2 $\mu$m.

Production Example 16

Into a pressure-resistant autoclave, 150 parts by mass of ion-exchanged water 85 parts by mass of 1,3-butadiene, 15 parts by mass of styrene, 0.5 parts by mass of t-dodecyl mercaptan, 0.4 parts by mass of diisopropylbenzene hydroperoxide, 1.5 parts by mass of sodium pyrophosphate, 0.02 parts by mass of ferrous sulfate, 1.0 parts by mass of dextrose, and 1.0 part by mass of potassium oleate were charged, and the mixture was reacted at 50°C for 15 hours under stirring, thereby producing a butadiene-based rubber polymerized latex.

65 parts of the butadiene-based rubber polymerized latex (as a solid content) was charged into a flask and replacement with nitrogen was performed, 1.2 parts by mass of $NaHCO_3$ was added as a 10% aqueous solution, and stirring was performed for 30 minutes. To this solution, 1 part of potassium oleate was added as a 7% aqueous solution to stabilize the solution. Thereafter, 0.6 parts by mass of Rongalite was added, the solution temperature was maintained at 70°C, and 35 parts by mass of a monomer mixture with the following composition was graft-polymerized with the butadiene-based rubber polymerized latex.

A mixture of 40 parts by mass of methyl methacrylate, 5 parts by mass of ethyl acrylate, and 0.1 parts by mass of t-butyl hydroperoxide (t-BH) was added dropwise over 1 hour as a monomer mixture for the first stage of grafting per 100 parts by mass of the entire graft monomer mixture, and the mixture was continuously stirred for 2 hours for polymerization. Thereafter, a mixture of 40 parts by mass of styrene and 0.1 parts by mass of t-BH was added dropwise over 1 hour as a monomer mixture for the second stage of grafting, and the mixture was continuously stirred for 2 hours for polymerization. Finally, a mixture of 15 parts by mass of methyl methacrylate and 0.05 parts by mass of t-BH was added dropwise over 1 hour as a monomer mixture for the third stage of grafting, and the mixture was continuously stirred for 2 hours for polymerization, thereby obtaining a latex of a multilayer copolymer elastomer (B-2).

0.5 parts by mass of BHT was added to the obtained latex of the multilayer copolymer elastomer (B-2), a 0.2% aqueous sulfuric acid solution was added to coagulate the multilayer copolymer elastomer (B-2), and a heat treatment and solidification were performed at 90°C. Thereafter, the coagulation was washed with warm water and further dried to obtain a multilayer copolymer elastomer (B-2) powder. An average particle diameter of the multilayer copolymer elastomer (B-2) was 0.2 $\mu$m.

Production Example 17

To a 3 $m^3$ glass lining-treated reaction vessel with the inside degassed and replaced with nitrogen, the reaction vessel being capable of performing brine cooling and equipped with a jacket and a stirrer, 735 kg of dry toluene, 0.4 kg of hexamethyltriethylenetetramine, and 39.4 kg of a toluene solution containing 20 mol of isobutylbis(2,6-di-t-butyl-4-methylphenoxy)aluminum were added at room temperature, and 1.17 mol of sec-butyllithium was further added. 35.0 kg of methyl methacrylate was added thereto, and the mixture was reacted at room temperature for 1 hour, thereby obtaining a methyl methacrylate polymer (polymer block (b1-1)) having a weight average molecular weight (hereinafter, referred to as Mw (b1-1)) of 40,000.

Subsequently, a mixed solution of 24.5 kg of n-butyl acrylate and 10.5 kg of benzyl acrylate was added dropwise over 0.5 hours while maintaining the reaction vessel at -25°C, and a polymer block (b2) containing a copolymer of n-butyl acrylate and benzyl acrylate was grown from one end of the polymer block (bl-1), thereby obtaining a diblock copolymer elastomer (B-3) having a weight average molecular weight of 80,000. Since the weight average molecular weight of the polymer block (b1-1) was 40,000, the weight average molecular weight (Mw (b2)) of the polymer block (b2) was determined to be 40,000. A content of an acrylic acid ester of the diblock copolymer elastomer (B-3) was 50% by mass.

Example 1

80 parts by mass of the acrylic copolymer (A-1) and 20 parts by mass of the multilayer copolymer elastomer (B-1) were mixed with each other, and the mixture was melt-kneaded and extruded at 250°C with a twin-screw extruder having a screw diameter of 20 mm, thereby obtaining a pellet-like acrylic resin composition (C-1) having a glass transition temperature of 120°C. The evaluation results are shown in Table 2.

Examples 2 to 10 and 12 as well as Reference Example 11

Acrylic resin compositions were obtained in the same manner as that of Example 1 except for the formulation described in Table 2. The evaluation results are shown in Table 2.

[Table 2]

| | | | Example 1 | Example 2 | Example 3 | Example 4 | Example 5 | Example 6 | Example 7 | Example 8 | Example 9 | Example 10 | Reference Example 11 | Example 12 |
|---|---|---|---|---|---|---|---|---|---|---|---|---|---|---|
| | | | C-1 | C-2 | C-3 | C-4 | C-5 | C-6 | C-7 | C-8 | C-9 | C-10 | C-11 | C-12 |
| Resin composition [parts by mass] | Acrylic copolymer | A-1 | 80 | | | | | 80 | 85 | 80 | | | | |
| | | A-2 | | 80 | | | | | | | | | | |
| | | A-3 | | | 80 | 60 | | | | | | | | |
| | | A-4 | | | | | 80 | | | | | | | |
| | | A-5 | | | | | | | | | 80 | | | |
| | | A-6 | | | | | | | | | | 80 | | |
| | | A-7 | | | 9 | 23 | | | 12 | | | | 80 | |
| | | A-8 | | | | | | | | | | | | 80 |
| | Elastomer | B-1 | 20 | 20 | 20 | 40 | 20 | | | 10 | 20 | 20 | 20 | 20 |
| | | B-2 | | | | | | 20 | | | | | | |
| | | B-3 | | | | | | | 15 | 10 | | | | |
| Evaluation | Glass transition temperature | | 120 | 133 | 133 | 122 | 127 | 118 | 128 | 125 | 125 | 132 | 133 | 128 |
| | VST [ °C] | | 112 | 125 | 125 | 114 | 119 | 110 | 120 | 117 | 117 | 124 | 125 | 120 |
| | Saturated water absorption rate [%] | | 2.1 | 1.6 | 1.7 | 1.8 | 1.5 | 2.0 | 2.0 | 2.0 | 1.8 | 2.2 | 2.4 | 1.2 |
| | Bending modulus [MPa] | | 2530 | 2550 | 2680 | 2000 | 2640 | 2400 | 2900 | 3190 | 2610 | 2810 | 3120 | 2850 |
| | Dimensional stability | | A | H | H | H | H | A | H | H | H | H | A | H |
| | Moldability | | A | A | A | A | A | A | A | A | A | A | A | A |
| | Surface hardness | | A | A | A | A | A | A | A | A | A | A | A | A |

Comparative Examples 1 to 7

Acrylic resin compositions were obtained in the same manner as that of Example 1 except for the formulation described in Table 2. The evaluation results are shown in Table 3.

[Table 3]

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| | | | C-13 | C-14 | C-15 | C-16 | C-17 | C-18 | C-19 |
| Resin composition [parts by mass] | Acrylic copolymer | A-9 | 80 | | | | | | 40 |
| | | A-10 | | 80 | | | | | |
| | | A-11 | | | 80 | | | | |
| | | A-12 | | | | 80 | | | |
| | | A-13 | | | | | 80 | | |
| | | A-14 | | | | | | 80 | |
| | Elastomer | B-1 | 20 | 20 | 20 | 20 | 20 | 20 | 60 |
| Evaluation | Glass transition temperature [°C] | | 123 | 152 | 109 | 129 | 117 | 120 | 106 |
| | VST [°C] | | 115 | 144 | 101 | 121 | 109 | 112 | 98 |
| | Saturated water absorption rate [%] | | 3.2 | 3.5 | 2.0 | 4.4 | 2.7 | 1.6 | 2.2 |
| | Bending modulus [MPa] | | 2530 | 3300 | 2530 | 3100 | 2700 | 2270 | 1100 |
| | Dimensional stability | | C | C | C | C | C | A | C |
| | Moldability | | A | A | A | A | A | C | A |
| | Surface hardness | | A | A | C | C | A | A | C |

As shown in Tables 1 to 3, since the acrylic resin composition of the present invention contains an acrylic copolymer excellent in a balance among heat resistance, low water absorption, and heat decomposition resistance, even when an elastomer is added, the acrylic resin composition maintains high heat resistance, low water absorption, and high rigidity, and has excellent thermal stability. The acrylic resin composition of the present invention can provide a molded article and a film that are excellent in dimensional stability, moldability, and surface hardness.

## Claims

1. An acrylic resin composition comprising:

   51 to 99% by mass of an acrylic copolymer (A) containing 30 to 87% by mass of a methyl methacrylate unit, 6 to 40% by mass of a structural unit (R) being an N-substituted glutarimide unit represented by Formula (I):

   [Chem. 1]

   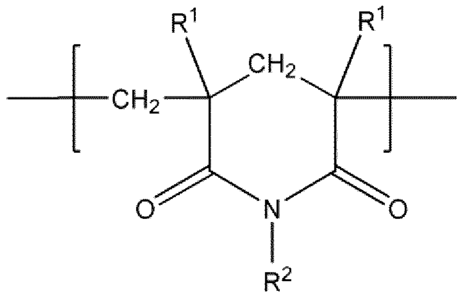

   (I)

   in Formula (I), $R^1$'s are each independently a hydrogen atom or a methyl group, and $R^2$ is an alkyl group having 1 to 18 carbon atoms, a cycloalkyl group having 3 to 12 carbon atoms, or an organic group having an aromatic ring and 6 to 15 carbon atoms, 7 to 30% by mass of an α-methylstyrene unit, and 0 to 20% by mass of another vinyl-based monomer unit (C) copolymerizable with methyl methacrylate; and
   1 to 49% by mass of an elastomer (B).

2. The acrylic resin composition according to claim 1, wherein the other vinyl-based monomer unit (C) copolymerizable with the methyl methacrylate unit is formed of at least one selected from the group consisting of an acrylic acid ester monomer, an aromatic vinyl monomer, and a vinyl cyanide monomer.

3. The acrylic resin composition according to claim 1 or 2, wherein the other vinyl-based monomer unit (C) copolymerizable with the methyl methacrylate unit is formed of at least one selected from the group consisting of methyl acrylate, ethyl acrylate, styrene, and acrylonitrile.

4. The acrylic resin composition according to claim 1 or 2, wherein the other vinyl-based monomer unit (C) copolymerizable with the methyl methacrylate unit is formed of styrene.

5. The acrylic resin composition according to any one of claims 1 to 4, wherein the elastomer (B) contains a multilayer copolymer elastomer containing a methacrylic acid ester unit and an acrylic acid ester unit.

6. The acrylic resin composition according to any one of claims 1 to 5, wherein the elastomer (B) contains a block copolymer elastomer composed of a polymer block (b1) containing a methacrylic acid ester unit and a polymer block (b2) containing an acrylic acid ester unit.

7. The acrylic resin composition according to any one of claims 1 to 6, wherein a softening temperature of a molded article is 110°C or higher when measured by a method specified in a B50 method of JIS K7206.

8. The acrylic resin composition according to any one of claims 1 to 7, wherein a saturated water absorption rate is 2.5% or less, wherein the saturated water absorption rate is determined as disclosed in the description.

9. A molded article comprising the acrylic resin composition according to any one of claims 1 to 8.

**10.** A film comprising the acrylic resin composition according to any one of claims 1 to 8.

**Patentansprüche**

**1.** Acrylharzzusammensetzung, umfassend:

51 bis 99 Massen-% eines Acrylcopolymers (A), enthaltend 30 bis 87 Massen-% einer Methylmethacrylateinheit, 6 bis 40 Massen-% einer Struktureinheit (R), die eine N-substituierte Glutarimideinheit ist, dargestellt durch Formel (I):

[Chem. 1]

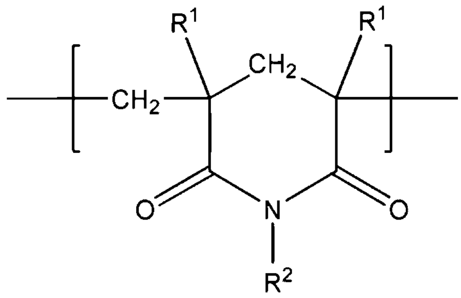

(I)

in Formel (I) sind $R^1$ jeweils unabhängig ein Wasserstoffatom oder eine Methylgruppe und $R^2$ ist eine Alkylgruppe mit 1 bis 18 Kohlenstoffatomen, eine Cycloalkylgruppe mit 3 bis 12 Kohlenstoffatomen oder eine organische Gruppe mit einem aromatischen Ring und 6 bis 15 Kohlenstoffatomen, 7 bis 30 Massen-% einer $\alpha$-Methylstyroleinheit und 0 bis 20 Massen-% einer anderen vinylbasierten Monomereinheit (C), copolymerisierbar mit Methylmethacrylat; und

1 bis 49 Massen-% eines Elastomers (B).

**2.** Acrylharzzusammensetzung nach Anspruch 1, wobei die andere vinylbasierte Monomereinheit (C), copolymerisierbar mit der Methylmethacrylateinheit, aus mindestens einem gebildet ist, ausgewählt aus der Gruppe, bestehend aus einem Acrylsäureestermonomer, einem aromatischen Vinylmonomer und einem Vinylcyanidmonomer.

**3.** Acrylharzzusammensetzung nach Anspruch 1 oder 2, wobei die andere vinylbasierte Monomereinheit (C), copolymerisierbar mit der Methylmethacrylateinheit, aus mindestens einem gebildet ist, ausgewählt aus der Gruppe, bestehend aus Methylacrylat, Ethylacrylat, Styrol und Acrylnitril.

**4.** Acrylharzzusammensetzung nach Anspruch 1 oder 2, wobei die andere vinylbasierte Monomereinheit (C), copolymerisierbar mit der Methylmethacrylateinheit, aus Styrol gebildet ist.

**5.** Acrylharzzusammensetzung nach einem der Ansprüche 1 bis 4, wobei das Elastomer (B) ein Mehrschichtcopolymerelastomer enthält, enthaltend eine Methacrylsäureestereinheit und eine Acrylsäureestereinheit.

**6.** Acrylharzzusammensetzung nach einem der Ansprüche 1 bis 5, wobei das Elastomer (B) ein Blockcopolymerelastomer enthält, zusammengesetzt aus einem Polymerblock (b1), enthaltend eine Methacrylsäureestereinheit, und einem Polymerblock (b2), enthaltend eine Acrylsäureestereinheit.

**7.** Acrylharzzusammensetzung nach einem der Ansprüche 1 bis 6, wobei eine Erweichungstemperatur eines Formgegenstands 110 °C oder höher ist, wenn durch ein Verfahren gemessen, das in einem B50-Verfahren des JIS K7206 bestimmt ist.

**8.** Acrylharzzusammensetzung nach einem der Ansprüche 1 bis 7, wobei eine gesättigte Wasserabsorptionsrate 2,5 % oder weniger ist, wobei die gesättigte Wasserabsorptionsrate bestimmt wird, wie in der Beschreibung offenbart.

**9.** Formgegenstand, umfassend die Acrylharzzusammensetzung nach einem der Ansprüche 1 bis 8.

**10.** Folie, umfassend die Acrylharzzusammensetzung nach einem der Ansprüche 1 bis 8.

## Revendications

1. Composition de résine acrylique comprenant :

   51 à 99 % en masse d'un copolymère acrylique (A) contenant 30 à 87 % en masse d'une unité de méthacrylate de méthyle, 6 à 40 % en masse d'une unité structurelle (R) qui est une unité de glutarimide N-substitué représentée par la Formule (I) :

   [Chim. 1]

   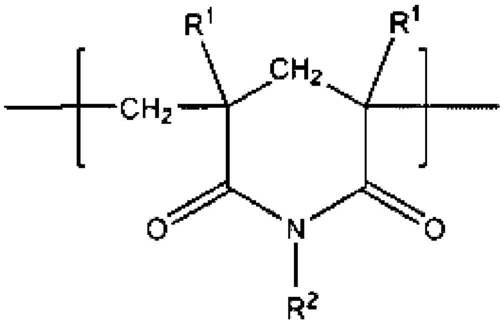

   (I)

   dans la Formule (I), les $R^1$ sont chacun indépendamment un atome d'hydrogène ou un groupe méthyle, et $R^2$ est un groupe alkyle ayant 1 à 18 atomes de carbone, un groupe cycloalkyle ayant 3 à 12 atomes de carbone, ou un groupe organique ayant un cycle aromatique et 6 à 15 atomes de carbone, 7 à 30 % en masse d'une unité d'$\alpha$-méthylstyrène, et 0 à 20 % en masse d'une autre unité monomère à base de vinyle (C) copolymérisable avec du méthacrylate de méthyle ; et
   1 à 49 % en masse d'un élastomère (B).

2. Composition de résine acrylique selon la revendication 1, dans laquelle l'autre unité monomère à base de vinyle (C) copolymérisable avec l'unité de méthacrylate de méthyle est formée d'au moins un composé sélectionné parmi le groupe constitué d'un monomère d'ester d'acide acrylique, d'un monomère de vinyle aromatique et d'un monomère de cyanure de vinyle.

3. Composition de résine acrylique selon la revendication 1 ou 2, dans laquelle l'autre unité monomère à base de vinyle (C) copolymérisable avec l'unité de méthacrylate de méthyle est formée d'au moins un composé sélectionné parmi le groupe constitué de l'acrylate de méthyle, de l'acrylate d'éthyle, du styrène et de l'acrylonitrile.

4. Composition de résine acrylique selon la revendication 1 ou 2, dans laquelle l'autre unité monomère à base de vinyle (C) copolymérisable avec l'unité de méthacrylate de méthyle est formée de styrène.

5. Composition de résine acrylique selon l'une quelconque des revendications 1 à 4, dans laquelle l'élastomère (B) contient un élastomère de copolymère multicouche contenant une unité d'ester d'acide méthacrylique et une unité d'ester d'acide acrylique.

6. Composition de résine acrylique selon l'une quelconque des revendications 1 à 5, dans laquelle l'élastomère (B) contient un élastomère de copolymère à blocs composé d'un bloc polymère (b1) contenant une unité d'ester d'acide méthacrylique et un bloc polymère (b2) contenant une unité d'ester d'acide acrylique.

7. Composition de résine acrylique selon l'une quelconque des revendications 1 à 6, dans laquelle une température de ramollissement d'un article moulé est de 110°C ou supérieure lors de la mesure par un procédé spécifié dans un procédé B50 de JIS K7206.

8. Composition de résine acrylique selon l'une quelconque des revendications 1 à 7, dans laquelle un taux d'absorption d'eau saturée est de 2,5 % ou moins, dans laquelle le taux d'absorption d'eau saturée est déterminé tel que divulgué dans la description.

9. Article moulé comprenant la composition de résine acrylique selon l'une quelconque des revendications 1 à 8.

**10.** Film comprenant la composition de résine acrylique selon l'une quelconque des revendications 1 à 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017179103 A
- WO 2014021264 A1
- JP 2000178399 A
- JP H05119217 A
- JP 2016008225 A
- JP 2009203348 A
- US 4888387 A
- JP H01315461 A
- JP 2007197703 A
- JP 2010096919 A
- WO 200510838 A1
- JP 2010254742 A
- JP 2008273140 A
- JP 2008274187 A
- JP 2005023272 A
- JP 2003231785 A